(19) **Europäisches Patentamt / European Patent Office / Office européen des brevets**

(11) **EP 3 203 744 A1**

(12) **EUROPEAN PATENT APPLICATION**
published in accordance with Art. 153(4) EPC

(43) Date of publication:
09.08.2017 Bulletin 2017/32

(21) Application number: 15855323.0

(22) Date of filing: 24.08.2015

(51) Int Cl.:
H04N 19/503 (2014.01)     H04N 19/50 (2014.01)
H04N 19/176 (2014.01)

(86) International application number:
PCT/KR2015/008814

(87) International publication number:
WO 2016/068467 (06.05.2016 Gazette 2016/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 31.10.2014 US 201462073378 P

(71) Applicant: Samsung Electronics Co., Ltd.
Gyeonggi-do 16677 (KR)

(72) Inventors:
• LEE, Jin-young
Suwon-si
Gyeonggi-do 16582 (KR)
• PIAO, Yin-ji
Yongin-si
Gyeonggi-do 16956 (KR)
• KIM, Chan-yul
Bucheon-si
Gyeonggi-do 95129 (KR)
• LEE, Sun-il
Seoul 06751 (KR)

(74) Representative: Appleyard Lees IP LLP
15 Clare Road
Halifax HX1 2HY (GB)

(54) **METHOD AND DEVICE FOR ENCODING OR DECODING IMAGE**

(57) Provided is a method of encoding an image, the method including: determining at least one compression unit included in the image; determining a scheme of changing a plurality of samples included in a current compression unit; changing the plurality of samples of the current compression unit based on the determined at least one compression unit and the determined scheme; splitting one of maximum coding units of the image including the changed plurality of samples into at least one coding unit; performing prediction by using at least one prediction unit determined from the at least one coding unit; and encoding the at least one coding unit by performing transformation by using at least one transformation unit determined from the at least one coding unit, wherein the encoding includes generating a bitstream including first information indicating the determined scheme.

FIG. 1A

EP 3 203 744 A1

# FIG. 1B

15

16

INFORMATION
OBTAINER

18

DECODER

**Description**

TECHNICAL FIELD

The present disclosure relates to a method and apparatus for efficiently compressing an image by processing the image and then compressing the processed image.

BACKGROUND ART

Image data is encoded via a codec according to a predetermined data compression standard, for example, Moving Picture Expert Group (MPEG) standard, and then is stored in or transmitted, through a communication channel, to a recording medium, in a form of a bitstream.

As hardware for reproducing and storing high resolution or high quality image content is being developed and supplied, a need for a codec for effectively encoding or decoding the high resolution or high quality image content is increasing. Encoded image content may be reproduced by being decoded. Recently, methods for effectively compressing such high resolution or high quality image content are being implemented. For example, an efficient image compressing method is performed through processes of processing an image to be encoded in an arbitrary method.

DETAILED DESCRIPTION OF THE INVENTION

TECHNICAL PROBLEM

As a method of effectively compressing a high resolution or high quality image, there may be several methods of modifying or processing an original image. Accordingly, since a method most optimized for a portion of an image to be compressed from among various processing methods may be different from methods optimized for other portions, if a decoding apparatus is unable to recognize which method is optimized in a corresponding compression unit after a modified or processed image is encoded, decoding may be very inefficient and performance of the decoding apparatus may deteriorate.

TECHNICAL SOLUTION

According to an aspect of an embodiment, a method of encoding an image, the method includes: determining at least one compression unit included in the image; determining a scheme of changing a plurality of samples included in a current compression unit; changing the plurality of samples of the current compression unit based on the determined at least one compression unit and the determined scheme; splitting one of maximum coding units of the image including the changed plurality of samples into at least one coding unit; performing prediction by using at least one prediction unit determined from the at least one coding unit; and encoding the at least one coding unit by performing transformation by using at least one transformation unit determined from the at least one coding unit, wherein the encoding includes generating a bitstream including first information indicating the determined scheme.

According to an aspect of another embodiment, a method of decoding an image, the method includes: splitting one of maximum coding units of the image into at least one coding unit; performing prediction based on at least one prediction unit determined from the at least one coding unit; performing inverse transformation on the image based on at least one transformation unit determined from the coding unit; determining at least one compression unit included in the image reconstructed based on the prediction and the inverse transformation; obtaining first information indicating a scheme of changing a plurality of samples included in a current compression unit, from a bitstream; determining the scheme of changing the plurality of samples based on the obtained first information; and changing the plurality of samples of the current compression unit based on the determined at least one compression unit and the determined scheme.

According to an aspect of another embodiment, an apparatus for encoding an image, the apparatus includes: an encoder configured to determine at least one compression unit included in the image, determine a scheme of changing a plurality of samples included in a current compression unit, change the plurality of samples of the current compression unit based on the determined at least one compression unit and the determined scheme, split one of maximum coding units of the image including the changed plurality of samples into at least one coding unit, perform prediction by using at least one prediction unit determined from the at least one coding unit, and encode the at least one coding unit by performing transformation by using at least one transformation unit determined from the at least one coding unit; and a bitstream generator configured to generate a bitstream comprising first information indicating the determined scheme.

According to an aspect of another embodiment, an apparatus for decoding an image, the apparatus includes: an information obtainer configured to obtain, from a bitstream, first information indicating a scheme of changing a plurality of samples included in a current compression unit; and a decoder configured to split one of maximum coding units of the image into at least one coding unit based on information about a largest size of a coding unit of the image, perform prediction based on at least one prediction unit determined from the at least one coding unit, performing inverse transformation on the image based on at least one transformation unit determined from the coding unit, determine at least one compression unit included in the image reconstructed based on the prediction and the inverse transformation, determine the scheme of changing the plurality of samples based on the obtained first information, change the plurality of samples of the current compression unit based on the determined at least one compression unit and the determined scheme, and perform prediction based on result of the changing and the at least one prediction unit.

According to an aspect of another embodiment, a non-transitory computer-readable recording medium has recorded thereon a program which, when executed by a computer, performs the method of encoding an image.

According to an aspect of another embodiment, a non-transitory computer-readable recording medium has recorded thereon a program which, when executed by a computer, performs the method of decoding an image.

ADVANTAGEOUS EFFECTS OF THE INVENTION

According to an embodiment, compression efficiency of a high resolution image may be improved by performing a predetermined change on a plurality of samples based on a compression unit to encode or decode an image.

DESCRIPTION OF THE DRAWINGS

FIG. 1A is a block diagram of an image encoding apparatus according to an embodiment.
FIG. 1B is a block diagram of an image decoding apparatus according to an embodiment.
FIG. 2A is a flowchart of an image encoding method performed by an image encoding apparatus, according to an embodiment.
FIG. 2B is a flowchart of an image decoding method performed by an image decoding apparatus, according to an embodiment.
FIG. 3A illustrates a sampling scheme as a scheme of changing a plurality of samples included in a current compression unit, according to an embodiment.
FIG. 3B illustrates a changing scheme including processes of changing locations of a plurality of samples of a current compression unit and changing a value of a sample.
FIG. 3C illustrates another example of a sampling scheme as a scheme of changing a plurality of samples included in a current compression unit, according to an embodiment.
FIG. 3D illustrates processes of arranging a plurality of samples included in a current compression unit by sampling the plurality of samples, and changing sample values, according to an embodiment.
FIG. 4A illustrates an example of a flipping scheme as a scheme of changing locations of a plurality of samples included in a current compression unit, according to an embodiment.
FIG. 4B illustrates another example of a flipping scheme as a scheme of changing locations of a plurality of samples included in a current compression unit, according to an embodiment.
FIG. 4C illustrates an example of a rotating scheme as a scheme of changing locations of a plurality of samples included in a current compression unit, according to an embodiment.
FIG. 5A illustrates processes of, when locations of a plurality of samples of a current compression unit are changed to decode an image, changing samples of a compression unit adjacent to the current compression unit, according to an embodiment.
FIG. 5B illustrates another scheme of, when locations of a plurality of samples of a current compression unit are changed to decode an image, changing samples of a compression unit adjacent to the current compression unit, according to an embodiment.
FIG. 6A illustrates a process of changing samples being referred to while performing prediction, according to an embodiment.
FIG. 6B illustrates a process of performing prediction by using a result of changing locations of samples adjacent to a current compression unit, according to an embodiment.
FIG. 7 is a block diagram of a video encoding apparatus based on coding units according to a tree structure, according to an embodiment.
FIG. 8 is a block diagram of a video decoding apparatus based on coding units according to a tree structure, according to an embodiment.
FIG. 9 illustrates a concept of coding units, according to an embodiment.
FIG. 10 illustrates a block diagram of an image encoder based on coding units, according to an embodiment.
FIG. 11 illustrates a block diagram of an image decoder based on coding units, according to an embodiment.

FIG. 12 illustrates deeper coding units according to depths, and partitions, according to an embodiment.

FIG. 13 illustrates a relationship between a coding unit and transformation units, according to an embodiment.

FIG. 14 illustrates a plurality of pieces of encoding information according to depths, according to an embodiment.

FIG. 15 illustrates deeper coding units according to depths, according to an embodiment.

FIGS. 16, 17, and 18 illustrate a relationship between coding units, prediction units, and transformation units, according to an embodiment.

FIG. 19 illustrates a relationship between a coding unit, a prediction unit, and a transformation unit according to encoding mode information of Table 1.

FIG. 20 illustrates a physical structure of the disc in which a program is stored, according to an embodiment.

FIG. 21 illustrates a disc drive for recording and reading a program by using the disc.

FIG. 22 illustrates an overall structure of a content supply system for providing a content distribution service.

FIGS. 23 and 24 illustrate external and internal structures of a mobile phone to which the video encoding method and the video decoding method are applied, according to an embodiment.

FIG. 25 illustrates a digital broadcasting system employing a communication system according to an embodiment.

FIG. 26 illustrates a network structure of a cloud computing system using the video encoding apparatus and the video decoding apparatus, according to an embodiment.

BEST MODE

According to an aspect of an embodiment, a method of encoding an image, the method includes: determining at least one compression unit included in the image; determining a scheme of changing a plurality of samples included in a current compression unit; changing the plurality of samples of the current compression unit based on the determined at least one compression unit and the determined scheme; splitting one of maximum coding units of the image including the changed plurality of samples into at least one coding unit; performing prediction by using at least one prediction unit determined from the at least one coding unit; and encoding the at least one coding unit by performing transformation by using at least one transformation unit determined from the at least one coding unit, wherein the encoding includes generating a bitstream including first information indicating the determined scheme.

The changing of the plurality of samples may include changing a plurality of samples of a neighboring compression unit adjacent to a boundary of the current compression unit or samples of reference frames by using a scheme corresponding to the determined scheme.

The encoding may include performing prediction on the plurality of samples of the current compression unit by using the changed plurality of samples of the neighboring compression unit or the changed samples of the reference frame.

The determining of the scheme may include determining the scheme of changing the plurality of samples of the current compression unit based on a scheme of changing the plurality of samples of the neighboring compression unit.

The generating of the bitstream including the first information may include generating the bitstream comprising the first information corresponding to the determined scheme based on a lookup table including information about changeable schemes.

The method may further include: generating the bitstream including second information indicating whether to change the plurality of samples, wherein the determining of the scheme may include determining the scheme of changing the plurality of samples when the second information indicates changing of the plurality of samples.

The determining of the scheme may include determining the scheme based on a rate distortion cost of the image.

The scheme may include at least one of sampling, flipping, filtering, transformation, rotation, and deformation of the plurality of samples of the current compression unit.

According to an aspect of another embodiment, a method of decoding an image, the method includes: splitting one of maximum coding units of the image into at least one coding unit; performing prediction based on at least one prediction unit determined from the at least one coding unit; performing inverse transformation on the image based on at least one transformation unit determined from the coding unit; determining at least one compression unit included in the image reconstructed based on the prediction and the inverse transformation; obtaining first information indicating a scheme of changing a plurality of samples included in a current compression unit, from a bitstream; determining the scheme of changing the plurality of samples based on the obtained first information; and changing the plurality of samples of the current compression unit based on the determined at least one compression unit and the determined scheme.

The changing of the plurality of samples may further include changing a plurality of samples of a neighboring compression unit adjacent to a boundary of the current compression unit or samples of a reference frame by using a scheme corresponding to the determined scheme.

The performing of the prediction may include performing prediction on the plurality of samples of the current compression unit by using the changed plurality of samples of the neighboring compression unit or the changed samples of the reference frame.

The determining of the scheme may include determining the scheme of changing the plurality of samples of the current compression unit based on a scheme of changing the plurality of samples of the neighboring compression unit.

The determining of the scheme may include determining the scheme of changing the plurality of samples based on a lookup table including the first information and information about changeable schemes.

The method may further include obtaining second information indicating whether to change the plurality of samples from the bitstream, wherein the determining of the scheme may include determining the scheme of changing the plurality of samples when the second information indicates changing of the plurality of samples.

The scheme may include at least one of sampling, flipping, filtering, transformation, rotation, and deformation of the plurality of samples of the current compression unit.

According to an aspect of another embodiment, an apparatus for encoding an image, the apparatus includes: an encoder configured to determine at least one compression unit included in the image, determine a scheme of changing a plurality of samples included in a current compression unit, change the plurality of samples of the current compression unit based on the determined at least one compression unit and the determined scheme, split one of maximum coding units of the image including the changed plurality of samples into at least one coding unit, perform prediction by using at least one prediction unit determined from the at least one coding unit, and encode the at least one coding unit by performing transformation by using at least one transformation unit determined from the at least one coding unit; and a bitstream generator configured to generate a bitstream comprising first information indicating the determined scheme.

According to an aspect of another embodiment, an apparatus for decoding an image, the apparatus includes: an information obtainer configured to obtain, from a bitstream, first information indicating a scheme of changing a plurality of samples included in a current compression unit; and a decoder configured to split one of maximum coding units of the image into at least one coding unit based on information about a largest size of a coding unit of the image, perform prediction based on at least one prediction unit determined from the at least one coding unit, performing inverse transformation on the image based on at least one transformation unit determined from the coding unit, determine at least one compression unit included in the image reconstructed based on the prediction and the inverse transformation, determine the scheme of changing the plurality of samples based on the obtained first information, change the plurality of samples of the current compression unit based on the determined at least one compression unit and the determined scheme, and perform prediction based on result of the changing and the at least one prediction unit.

According to an aspect of another embodiment, a non-transitory computer-readable recording medium has recorded thereon a program which, when executed by a computer, performs the method of encoding an image.

According to an aspect of another embodiment, a non-transitory computer-readable recording medium has recorded thereon a program which, when executed by a computer, performs the method of decoding an image.

MODE OF THE INVENTION

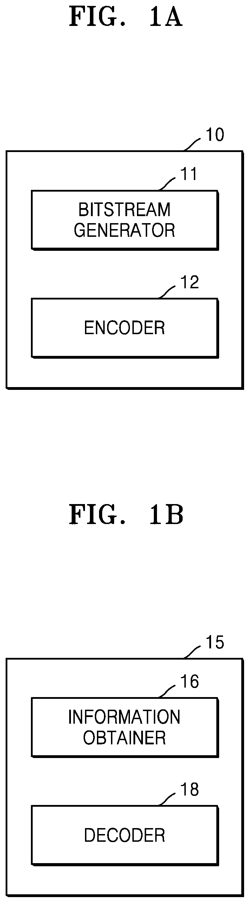

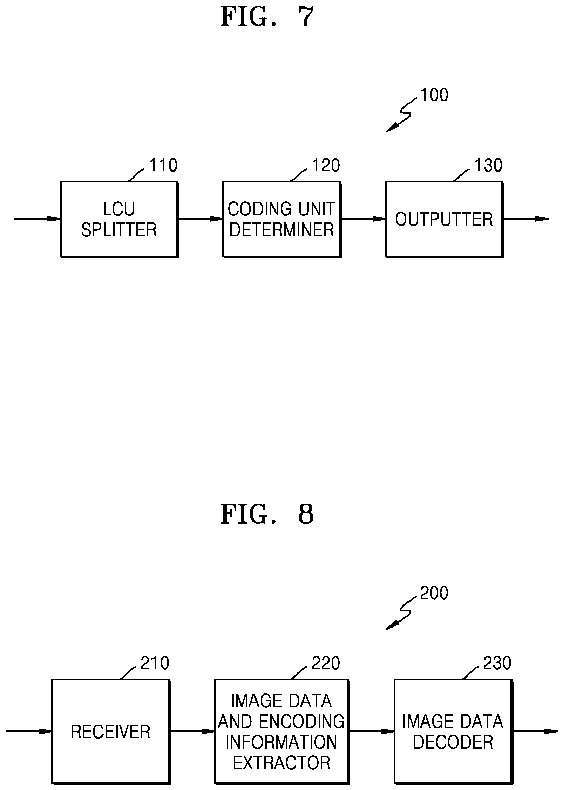

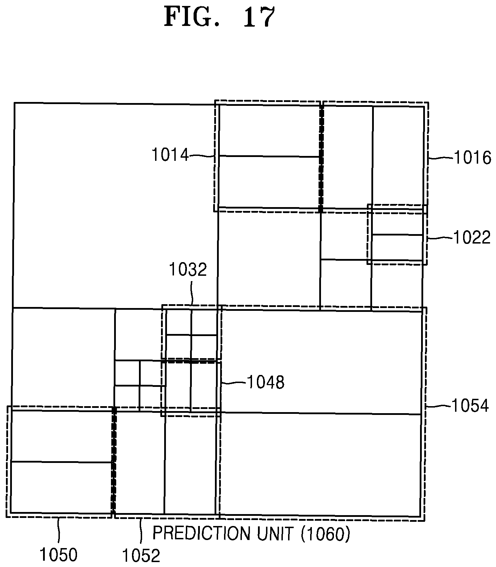

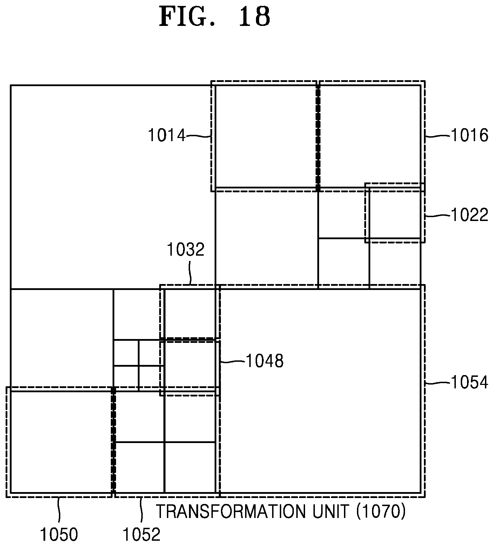

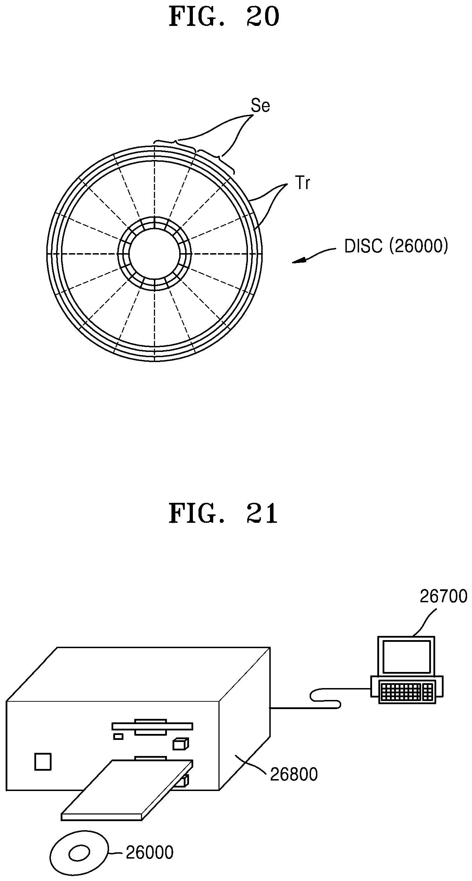

Hereinafter, scalable video encoding methods or decoding methods are suggested according to various embodiments with reference to FIGS. 1A through 6B. Also, video encoding techniques and video decoding techniques based on coding units of a tree structure according to various embodiments, which are applicable to depth image decoding techniques and depth image encoding techniques suggested above, are described with reference to FIGS. 7 through 19. Also, various embodiments applicable to video encoding methods and video decoding methods suggested above are described with reference to FIGS. 20 through 26.

Hereinafter, an "image" may refer to a still image or a moving image of a video, or a video itself.

Hereinafter, a "sample" refers to data that is assigned to a sampling location of an image and is to be processed. For example, pixel values in an image of a spatial region or transformation coefficients on a transformation region may be samples.

Hereinafter, a "compression unit" may be unit for performing an image change, through an arbitrary process, on an image processed through an image encoding or decoding process. The compression unit may be a process unit (for example, a unit corresponding to a sequence, frame, slice, maximum coding unit, or coding unit) used during an existing coding or decoding process, but is not limited thereto, and may correspond to a separate unit different from the processing unit.

FIG. 1A is a block diagram of an image encoding apparatus 10 according to an embodiment. The image encoding apparatus 10 may include a bitstream generator 11 and an encoder 12, which are components for encoding an image. Details about an image encoding method performed in the image encoding apparatus 10 by the bitstream generator 11 and the encoder 12 will be described through various embodiments below.

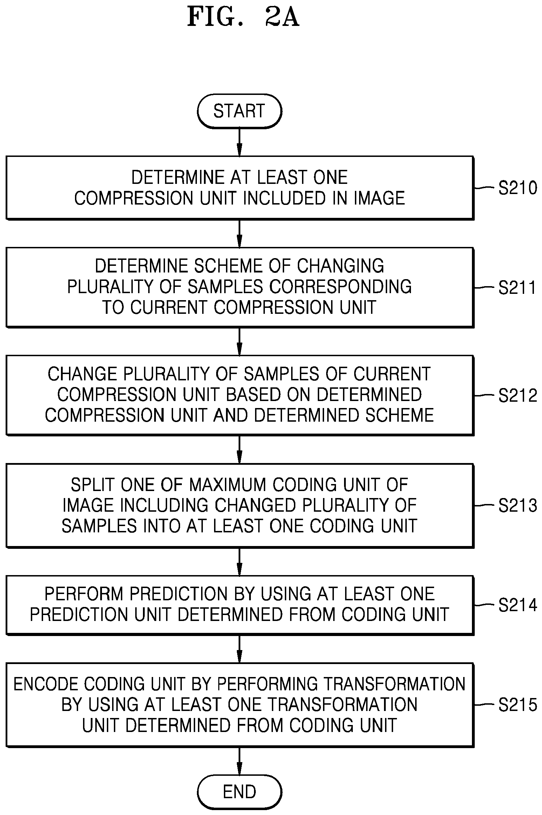

FIG. 2A is a flowchart of an image encoding method performed by the image encoding apparatus 10, according to an embodiment.

In operation S210, the image encoding apparatus 10 may determine at least one compression unit included in an image to be encoded. According to an embodiment, the image encoding apparatus 10 may pre-perform an arbitrary processing process on the image to be encoded based on the compression unit. The image encoding apparatus 10 may determine a pre-determined arbitrary unit as the compression unit, or may adaptively determine the compression unit according to characteristics of the image to be processed. Hereinafter, for convenience of description, one or more embodiments will be described based on a compression unit having a certain size, but are not limited thereto.

The compression unit that may be determined by the image encoding apparatus 10 according to an embodiment may vary. For example, various units that may be used during image encoding processes may be provided as the compression unit. Various embodiments described hereinafter are described based on the premise that a size of the compression unit is the same as a size of a coding unit.

In operation S211, the image encoding apparatus 10 may determine a scheme of changing a plurality of samples included in a current compression unit.

According to an embodiment, the encoder 12 of the image encoding apparatus 10 may change the plurality of samples included in the current compression unit that is one of the at least one compression unit determined in operation S210, so as to use the changed samples during the image encoding processes afterward. By using the sample changed via such an arbitrary scheme during encoding processes, encoding efficiency of the image encoding apparatus 10 may improve.

The scheme of changing the plurality of samples by the encoder 12 of the image encoding apparatus 10 may be various. Hereinafter, some of various embodiments will be described, but the present disclosure may not be limitedly interpreted by such changing schemes.

According to an embodiment, the bitstream generator 11 of the image encoding apparatus 10 may generate a bitstream including information about the changing scheme determined in operation S211. The information about the changing scheme may correspond to a format of a flag or index, and may be transmitted according to various compression units including a sequence, a frame, a slice, a slice segment, a maximum coding unit, a coding unit, a prediction unit, and a transformation unit.

According to an embodiment, while determining the changing scheme of the current compression unit, the encoder 12 of the image encoding apparatus 10 may determine the changing scheme of the current compression unit by using a changing scheme related to another compression unit adjacent to the current compression unit. For example, the changing scheme of the current compression unit may be determined by using information about the changing scheme related to the other compression unit adjacent to the current compression unit.

In operation S212, the image encoding apparatus 10 may change the plurality of samples of the current compression unit based on the determined compression unit and the scheme determined in operation S211, according to an embodiment.

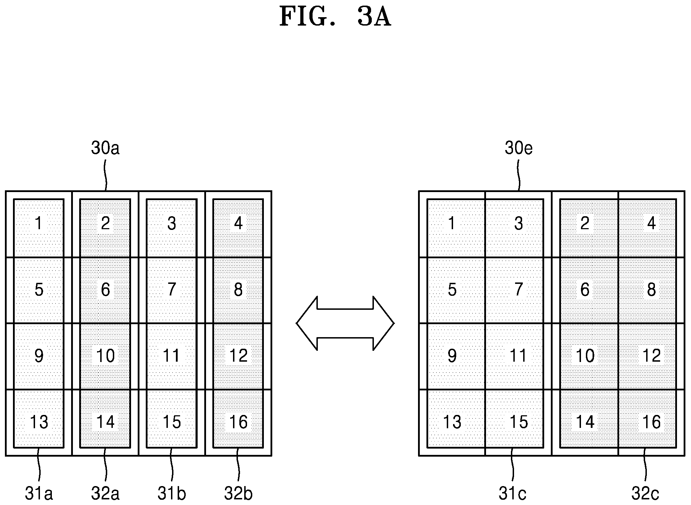

FIG. 3A illustrates a sampling scheme as the scheme of changing the plurality of samples included in the current compression unit, according to an embodiment. Here, the sample scheme may be defined to be a scheme of rearranging locations of a plurality of samples included in a compression unit such that odd$^{th}$ or even$^{th}$ samples based on rows or columns from among the plurality of samples included in the compression unit according to an embodiment are processed together.

According to an embodiment, the encoder 12 may determine the changing scheme for encoding efficiency optimized according to compression units, from among various changing schemes. For example, the image encoding apparatus 10 may determine a scheme having excellent efficiency by examining a rate distortion cost with respect to the current compression unit.

Referring to FIG. 3A, the encoder 12 of the image encoding apparatus 10 may determine the at least one compression unit included in the image, and determine one of the at least one compression unit as a current compression unit 30a. According to an embodiment, the determined current compression unit 30a may correspond to a coding unit used by the image encoding apparatus 10 during encoding processes, but a compression unit may not be limitedly interpreted thereby.

According to an embodiment, the encoder 12 may classify a plurality of samples of the current compression unit 30a into samples 31 a and 31 b in odd$^{th}$ columns and samples 32a and 32b in even$^{th}$ columns to change the samples of the current compression unit 30a via the sample scheme. For example, the encoder 12 may determine a plurality of samples of a changed compression unit 30e by changing the current compression unit 30a via a scheme of arranging locations of the samples 31 a and 31 b in the odd$^{th}$ columns of the current compression unit 30a at left columns of the current compression unit and arranging locations of the samples 32a and 23b in the even$^{th}$ columns of the current compression unit 30a at right columns of the current compression unit. As a result, the plurality of samples included in the current compression unit 30a may be divided into samples 31c that were in the odd$^{th}$ columns and samples 32c that were in the even$^{th}$ columns to be respectively provided at the left and right of the current compression unit 30a.

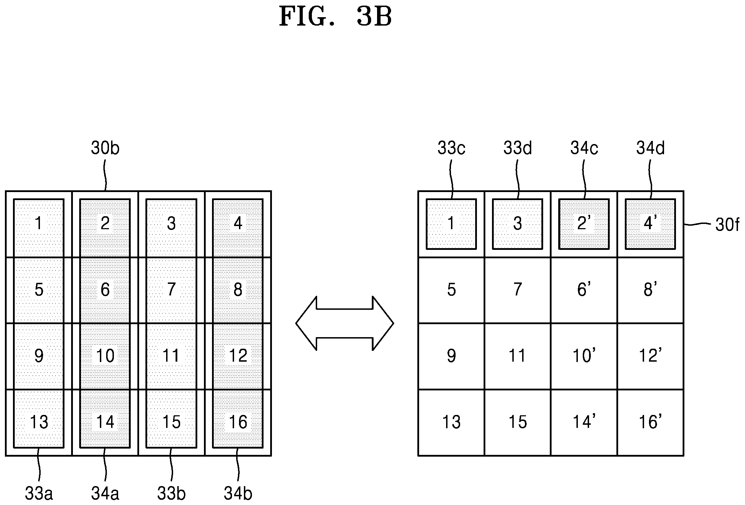

FIG. 3B illustrates a changing scheme including processes of changing locations of a plurality of samples of a current compression unit 30b and changing a value of a sample. According to an embodiment, the encoder 12 may determine a changed compression unit 30f by not only changing the locations of the plurality of samples included in the current compression unit 30b, but also by changing and rearranging values of the samples, based on a changing scheme with respect to the current compression unit 30b. Referring to FIG. 3B, the encoder 12 may change the samples of the current compression unit 30b by using a sampling scheme by classifying the plurality of samples of the current compression unit 30b into samples 33a and 33b in odd$^{th}$ columns and samples 34a and 34b in even$^{th}$ columns. In addition, the encoder 12 may determine values of the samples 34a and 34b in the even$^{th}$ columns of the current compression unit 30b by using values of the samples 33a and 33b in the odd$^{th}$ columns. For example, a first sample 33c and a third sample 33d from among the samples included in the current compression unit 30b before being changed may be samples located in first and third columns of the odd$^{th}$ columns from among the plurality of samples of the current compression unit 30b before being changed. A value of a second sample 34c that were in the even$^{th}$ column from among the samples located in the same row may be determined by using the values of the first and third samples 33c and 33d. For example, the value of the second sample 34c may correspond to an average of the values of the first and third samples 33c and 33d.

In addition, the encoder 12 may also determine a value of a fourth sample 34d that were in the even$^{th}$ column from among the samples located in the same row may be determined by using the values of the first and third samples 33c and 33d. Alternatively, the value of the fourth sample 34d may be determined by using the value of the second sample 34c determined based on the values of the first and third samples 33c and 33d. For example, the encoder 12 may determine the value of the fourth sample 34d by arithmetically calculating the value of the second sample 34c.

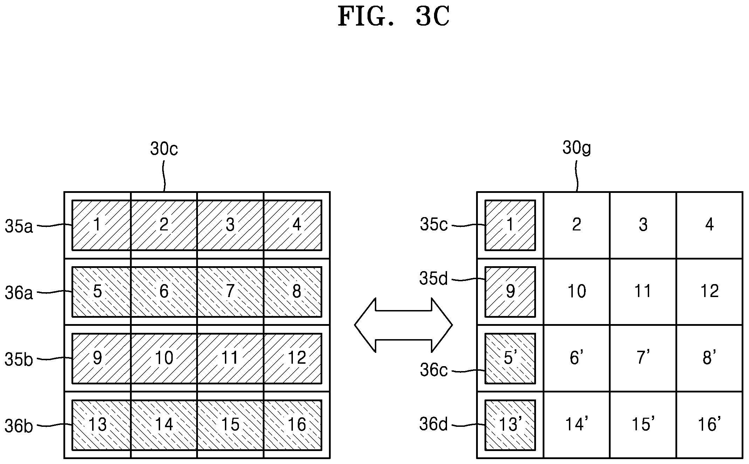

FIG. 3C illustrates another example of a sampling scheme as a scheme of changing a plurality of samples included in a current compression unit 30c, according to an embodiment.

Referring to FIG. 3C, the encoder 12 may determine a changed compression unit 30g by changing the samples of the current compression unit 30c via a sampling scheme by classifying the plurality of samples of the current compression unit 30c into samples 35a and 35b in odd$^{th}$ rows and samples 36a and 36b in even$^{th}$ rows. In addition, the encoder 12 may determine values of the samples 36a and 36b in the even$^{th}$ rows of the current compression unit 30c by using values of the samples 35a and 35b in the odd$^{th}$ rows. For example, a first sample 35c and a ninth sample 35d from among the samples included in the current compression unit 30c before being changed may be samples respectively located at first and third rows, i.e., the odd$^{th}$ rows, from among the plurality of samples of the current compression unit 30c before being changed. A value of a fifth sample 36c that were in the even$^{th}$ row from among the samples located in the same column may be determined by using the values of the first and ninth samples 35c and 35d. For example, the value of the fifth sample 36c may correspond to an average of the values of the first and ninth samples 35c and 35d. In addition, the encoder 12 may also determine a value of a thirteenth sample 36d that where in the even$^{th}$ column from among the samples located in the same row by using the values of the first and ninth samples 35c and 35d. Alternatively, the value of the thirteenth sample 36d may be determined by using the value of the fifth sample 36c determined based on the values of the first and ninth samples 35c and 35d. For example, the encoder 12 may obtain the value of the thirteenth sample 36d by arithmetically calculating the value of the fifth sample 36c.

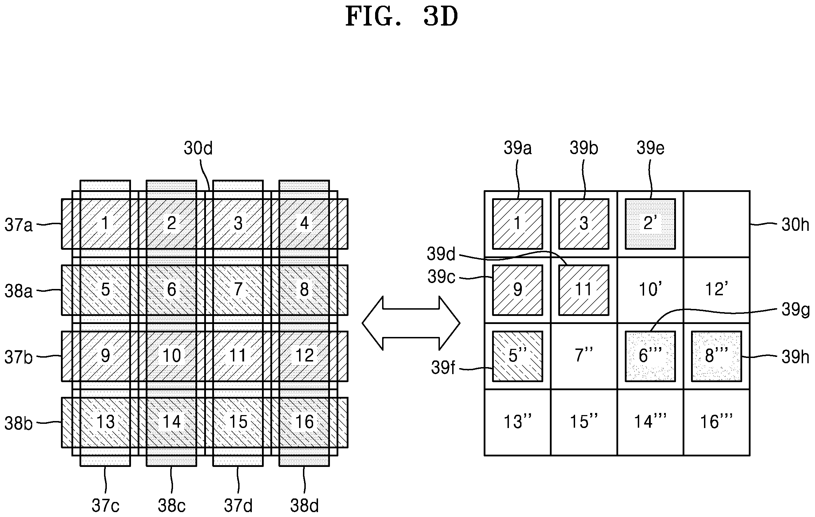

FIG. 3D illustrates processes of arranging a plurality of samples included in a current compression unit 30d by sampling the plurality of samples, and changing sample values, according to an embodiment.

Referring to FIG. 3D, the encoder 12 may change the samples of the current compression unit 30d via a sampling scheme by classifying the plurality of samples of the current compression unit 30d before being changed into samples 37a and 37b in odd$^{th}$ rows and samples 38a and 38b in even$^{th}$ rows. In addition, the encoder 12 may change the samples of the current compression unit 30d via the sampling scheme by classifying the plurality of samples of the current compression unit 30d into samples 37c and 37d in odd$^{th}$ columns and samples 38c and 38d in even$^{th}$ columns. In addition, the encoder 12 may determine values of the samples 38a and 38b in the even$^{th}$ rows of the current compression unit 30d by using values of the samples 37a and 37b in the odd$^{th}$ rows. For example, a first sample 39a and a ninth sample 39c from among the samples included in the current compression unit 30d before being changed may be samples respectively located in a first row 37a and a third row 37b, i.e., the odd$^{th}$ rows, from among the plurality of samples of the current compression unit 30d before being changed. A value of a fifth sample 39f that were in the even$^{th}$ row from among the samples located in the same column may be determined by using the values of the first sample 39a and the ninth sample 39c. For example, the encoder 12 may determine a changed compression unit 30h by determining the value of the fifth sample 39f to be an average value of the values of the first and ninth samples 39a and 39c. Here, since such an embodiment may correspond to that described with reference to FIG. 3B, details thereof are not provided.

Moreover, the encoder 12 may change the samples of the current compression unit 30d via the sampling scheme by classifying the plurality of samples of the current compression unit 30d before being changed into the samples 33a and 33b in the odd$^{th}$ columns and the samples 34a and 34b in the even$^{th}$ columns. Moreover, the encoder 12 may determine the values of the samples 38a and 38b in the even$^{th}$ columns of the current compression unit 30d by using the values of the samples 37a and 37b in the odd$^{th}$ columns. For example, the first sample 39a and a third sample 39b from among the samples included in the current compression unit 30b before being changed may be samples located in a first column 37c and a third column 37d, i.e., the odd$^{th}$ columns, from among the plurality of samples of the current compression unit 30d before being changed. A value of a second sample 39e that was in the even$^{th}$ column from among the samples located in the same row may be determined by using the values of the first and third samples 39a and 39b. For example, the encoder 12 may determine the changed compression unit 30h by determining the value of the second sample 39e to be an average value of the values of the first and third samples 39a and 39b. Here, since such an embodiment may correspond to that described with reference to FIG. 3C, details thereof are not provided.

According to an embodiment, the encoder 12 may change the samples in the even$^{th}$ rows and even$^{th}$ columns of the current compression unit 30d before being changed by using other adjacent samples. For example, referring to FIG. 3D, the changed compression unit 30h may be determined by changing a sixth sample 39g located in a second row 38a and a second column 38c based on samples located in an adjacent odd$^{th}$ row and an adjacent odd$^{th}$ column. In detail, the value of the sixth sample 39g may be changed to a value corresponding to an average value of the first sample 39a located in the first row and the first column, the third sample 39b located in the first row and the third column, the ninth sample 39c located in the third row and the first column, and an eleventh sample 39d located in the third row and the third column.

According to an embodiment, the encoder 12 may change a sample value of another sample based on changed sample values of samples. For example, referring to FIG. 3D, a sample value of an eighth sample 39h located in the second row 38a and a fourth column 38d of the current compression unit 30d before being changed may be changed based on samples located in an adjacent odd$^{th}$ row and an adjacent odd$^{th}$ column. In detail, the sample value of the eighth sample 39h of the current compression unit 30d before being changed may be changed based on the sample value of the sixth sample 39g located in the second row 38a and the second column 38c. For example, the changed compression unit 30h may be determined by changing the value of the eighth sample 39h to a value changed by arithmetically calculating the sample value of the sixth sample 39g.

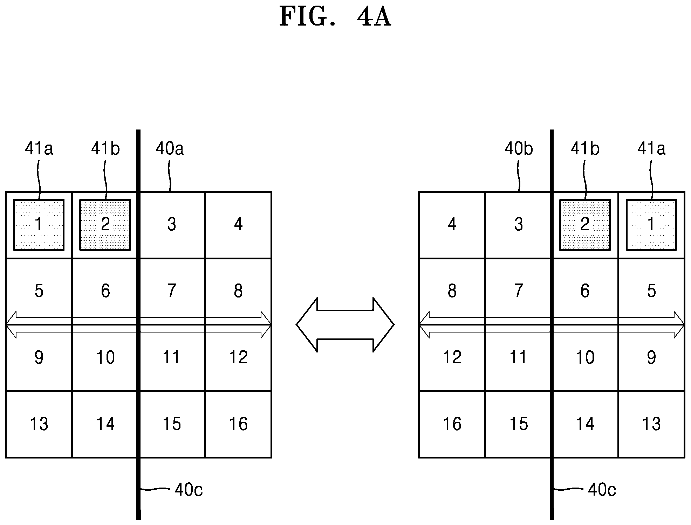

FIG. 4A illustrates an example of a flipping scheme as a scheme of changing, by the image encoding apparatus 10, locations of a plurality of samples included in a current compression unit 40a, according to an embodiment.

Referring to FIG. 4A, the encoder 12 may change locations of samples such that left and right of the plurality of samples included in the current compression unit 40a are changed. For example, a first sample 41 a located in a first row and a first column of the current compression unit 40a may be disposed by the encoder 12 in the first row and a fourth column of the current compression unit 40a so as to be located at an opposite side based on a line 40c splitting the current compression unit 40a in halves. As another example, a second sample 41 b located in the first row and a second column of the current compression unit 40a may be disposed by the encoder 12 in the first row and a third column of the current compression unit 40a so as to be located at an opposite side based on the line 40c splitting the current compression unit 40a in halves. As a result, the encoder 12 may horizontally flip the plurality of samples of the current compression unit 40a to obtain a flipped compression unit 40b. However, since the current embodiment is only an example for describing a changing scheme of a compression unit of the present disclosure, a flipping changing scheme of changing a plurality of sample locations of a compression unit should not be limited to above, and flipping directions and standards may vary.

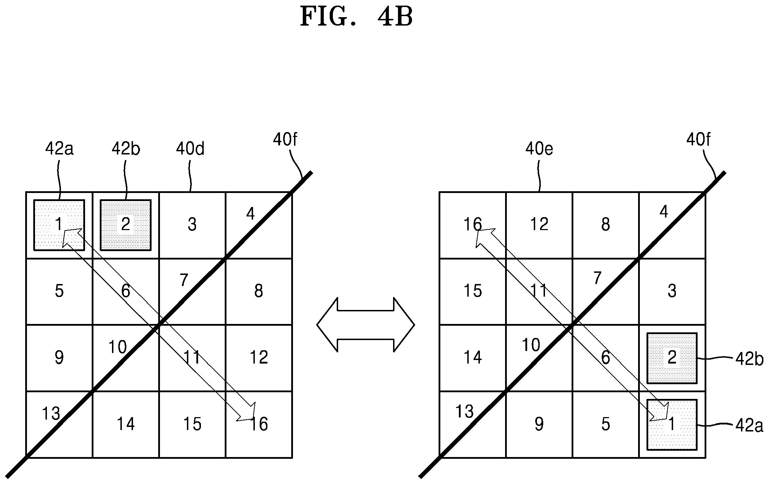

FIG. 4B illustrates another example of a flipping scheme as a scheme of changing, by the image encoding apparatus 10, locations of a plurality of samples included in a current compression unit 40d, according to an embodiment.

Referring to FIG. 4B, the encoder 12 may change locations of samples such that the locations of the plurality of samples included in the current compression unit 40d may be changed in a diagonal direction. For example, a first sample 42a located in a first row and a first column of the current compression unit 40d may be disposed by the encoder 12 in a fourth row and a fourth column of the current compression unit 40d so as to be located at an opposite side based on a line 40f splitting the current compression unit 40d in halves. As another example, a second sample 42b located in the first row and a second column of the current compression unit 40d may be disposed by the encoder 12 in a third row and the fourth column of the current compression unit 40d so as to be located at an opposite side based on the line 40f splitting the current compression unit 40d in halves. As a result, the encoder 12 may diagonally flip the plurality of samples of the current compression unit 40d to obtain a flipped compression unit 40e. However, since the current embodiment is only an example for describing a changing scheme of a compression unit of the present disclosure, a flipping changing scheme of changing a plurality of sample locations of a compression unit should not be limited to above, and flipping directions and standards may vary. Accordingly, an angle or location of a line that is a base of a flipping changing method in a diagonal direction may vary.

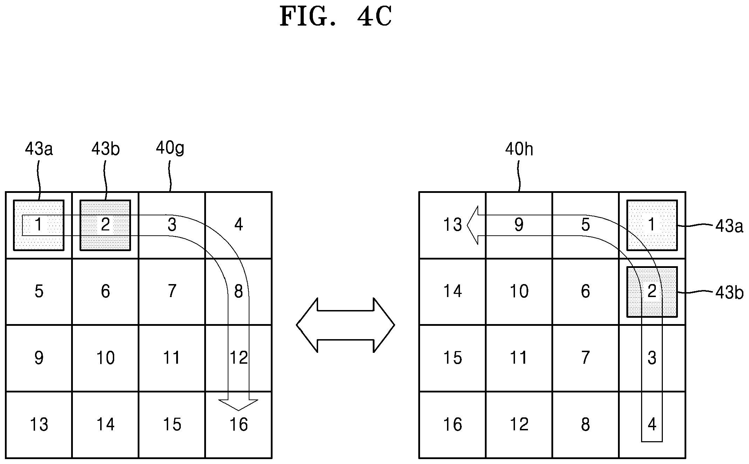

FIG. 4C illustrates an example of a rotating scheme as a scheme of changing, by the image encoding apparatus 10, locations of a plurality of samples included in a current compression unit 40g, according to an embodiment.

Referring to FIG. 4C, the encoder 12 may change locations of samples via a scheme in which the locations of the plurality of samples included in the current compression unit 40g are rotated in the current compression unit 40g. For example, the encoder 12 may change a location of a first sample 43a to a first row and a fourth column of the current compression unit 40g by rotating the plurality of samples including the first sample 43a located in the first row and a first column of the current compression unit 40g in a clockwise direction. As another example, the encoder 12 may change a location of a second sample 43b of the current compression unit 40g to a second row and the fourth column of the current compression unit 40g by rotating the plurality of samples including the second sample 43b located in the first row and a second column of the current compression unit 40g in the clockwise direction. As a result, the current compression unit 40g may be changed to a compression unit 40h in which the plurality of samples of the current compression unit 40g are rotated in the clockwise direction by the encoder 12. However, since the current embodiment is only an example for describing a changing scheme of a compression unit of the present disclosure, a rotating changing scheme of changing a plurality of sample locations of a compression unit should not be limited to above. In other words, a rotation direction may be a clockwise direction or a counterclockwise direction, and a rotating angle may also vary.

According to an embodiment, the image encoding apparatus 10 may change sample values of a plurality of samples included in a current compression unit according to a certain method. For example, the encoder 12 may change the plurality of samples included in the current compression unit via a scheme, such as filtering, transformation, and deformation.

According to an embodiment, a type of a filter used to change a sample value via filtering may vary, such as a low pass filter and a high pass filter.

According to an embodiment, when a sample value is changed via a transformation scheme, the image encoding apparatus 10 may change the sample value via an algorithm of various schemes according to discrete cosine transform (DCT), or may change a sample value according to fast Fourier transform (FFT).

When a sample value is changed according to a deformation scheme according to an embodiment, the image encoding apparatus 10 may distort an image shown in a current compression unit by changing sample values of a plurality of samples included in the current compression unit. For example, the image encoding apparatus 10 may change the sample values of the plurality of samples included in the current compression unit via a scheme of reducing or reinforcing distortion shown in an image to be encoded by using parameter information related to the image, such as a focus distance or an iris value as camera parameter information. The image encoding apparatus 10 may change locations of the plurality of samples having sample values changed according to the certain method. Since a method of changing locations of a plurality of samples may correspond to various embodiments described above through drawings, details thereof are not provided.

In operation S213, the image encoding apparatus 10 may split one of maximum coding units of the image including the plurality of samples changed in operation S212 into at least one coding unit. The encoder 12 of the image encoding apparatus 10 determine the maximum coding units of the image, and split one of the maximum coding units into the at least one coding unit according to split information of a coding unit. For example, the encoder 12 may split the maximum coding unit to a quad-tree structure, and the maximum coding unit split as such may include at least one coding unit.

In operation S214, the image encoding apparatus 10 may determine at least one prediction unit from the coding unit based on partition type information, and perform prediction by using the determined at least one prediction unit. The bitstream generator 11 may generate a bitstream including information about a partition type that is a form of the prediction unit included in the coding unit determined in operation S213, and in addition, the encoder 12 may determine the at least one prediction unit related to the coding unit based on such partition type information. The encoder 12 may perform prediction based on the prediction unit. Since prediction processes performed by the encoder 12 may be described by various embodiments described above or below, details thereof are not provided here.

In operation S215, the image encoding apparatus 10 may encode the current coding unit by performing transformation on a differential signal based on at least one transformation unit determined from the coding unit. The differential signal may correspond to a difference between an original signal of the changed image and a prediction signal, and the encoder 12 may perform transformation processes on the differential signal. According to an embodiment, the encoder 12 may determine the at least one transformation unit from the coding unit by using split information of a transformation unit, which indicates whether a transformation unit of a current depth corresponding to a depth of a coding unit is split into transformation units of a lower depth. The encoder 12 may determine, from the current coding unit, the at least one transformation unit that may be determined in a form corresponding to the coding unit or determined by being split from a coding unit. In other words, the encoder 12 may determine, according to the split information of a transformation unit, whether the transformation unit is to be determined as a transformation unit of a lower depth by being split into a plurality of transformation units, or whether the transformation unit with respect to the current coding unit is to be determined as a transformation unit of a shape corresponding to the coding unit as a depth of the transformation unit is determined to be a current depth.

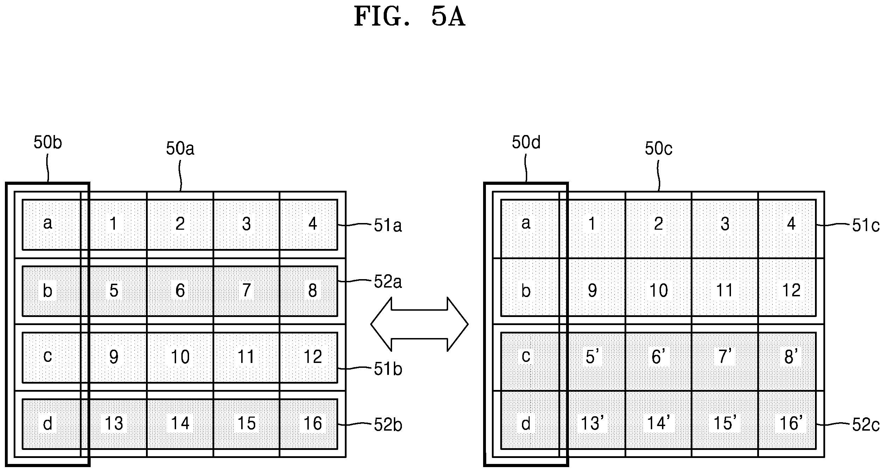

FIG. 5A illustrates processes of, when locations of a plurality of samples of a current compression unit are changed to decode an image, changing samples of a compression unit adjacent to the current compression unit, according to an embodiment.

According to an embodiment, the encoder 12 of the image encoding apparatus 10 may change a plurality of samples included in a current compression unit 50a, and may change adjacent samples 50b adjacent to the current compression unit 50a via a scheme corresponding to a scheme of changing the current compression unit 50a. Referring to FIG. 5A, the image encoding apparatus 10 may change the plurality of samples included in the current compression unit 50a via a sampling scheme. Details about the sampling scheme may be details about various embodiments described above, and thus descriptions thereof are not provided. Here, the adjacent samples changed together according to the changing scheme of the current compression unit 50a may be samples that are not changed according to an embodiment.

According to an embodiment, the encoder 12 may perform sampling based on odd[th] rows 51 a and 51 b and even[th] rows 52a and 52b of the current compression unit 50a. As a result, samples included in the odd[th] rows 51a and 51b of the current compression unit 50a may be dispoed at an upper portion of the current compression unit 50a, and samples included in the even[th] rows 52a and 52b may be disposed at a lower portion of the current compression unit 50a, and thus a changed current compression unit 50c may be obtained. In this case, the encoder 12 may change not only the plurality of samples included in the current compression unit 50a but also samples of another compression unit adjacent to the current compression unit via the same scheme. For example, the encoder 12 may dispose, according to the sampling scheme that is the scheme of changing the current compression unit 50a, ath and cth samples located in the odd[th] rows 51 a and 51 b of the current compression unit 50a, from among the adjacent samples 50b adjacent to a left boundary of the current compression unit 50a, at an upper portion of the adjacent compression unit. In addition, the encoder 12 may dispose bth and dth samples located in the even[th] rows 52a and 52b of the current compression unit 50a, from among the adjacent samples 50b adjacent to the left boundary of the current compression unit 50a, at a lower portion of the adjacent compression unit. Adjacent samples 50d changed according to the scheme of changing the current compression unit 50a may be used as reference samples during prediction processes of the plurality of samples of the changed current compression unit 50c. Details about the prediction processes will be described below through embodiments.

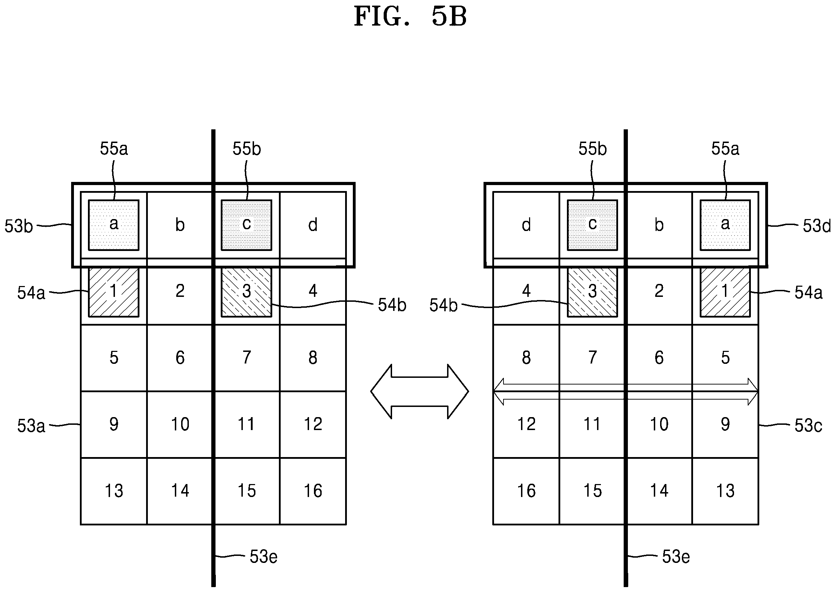

FIG. 5B illustrates another scheme of, when locations of a plurality of samples of a current compression unit are changed to decode an image, changing samples of a compression unit adjacent to the current compression unit, according to an embodiment. Referring to FIG. 5B, the image encoding apparatus 10 may change a plurality of samples included in a current compression unit 53a via a flipping scheme. Since details about the flipping scheme may be details about various embodiments described above, descriptions thereof are not provided. Here, adjacent samples changed together according to the changing scheme of the current compression unit 53a may be samples that are not changed according to an embodiment.

According to an embodiment, the encoder 12 may use the flipping scheme so as to change arrangement of the plurality of samples included in the current compression unit 53a. The encoder 12 may change left and right locations of the plurality of samples of the current compression unit 53a based on a baseline 53e according to the flipping scheme. Accordingly, a location of a first sample 54a located in a first row and a first column of the current compression unit 53a may be changed to a location in the first row and a fourth column, and a location of a third sample 54b located in the first row and a third column of the current compression unit 53a may be changed to a location in the first row and a second column of the current compression unit 53a. In addition, the encoder 12 may change not only the plurality of samples included in the current compression unit 53a, but also samples of another compression unit adjacent to the current compression unit, via the same scheme. For example, the encoder 12 may change locations of adjacent samples 53b adjacent to an upper boundary of the current compression unit 53a according to the flipping scheme of the current compression unit 53a. Accordingly, a location of an ath sample 55a located in a first column of the adjacent samples 53b may be changed to a location in a fourth column, and a location of a cth sample 55b located in a third column may be changed to a location in a second column. Adjacent samples 53d changed according to the changing scheme of the current compression unit 53a may be used as reference samples during prediction processes of a plurality of samples of a changed current compression unit 53c. Details about the prediction processes will be described below through embodiments.

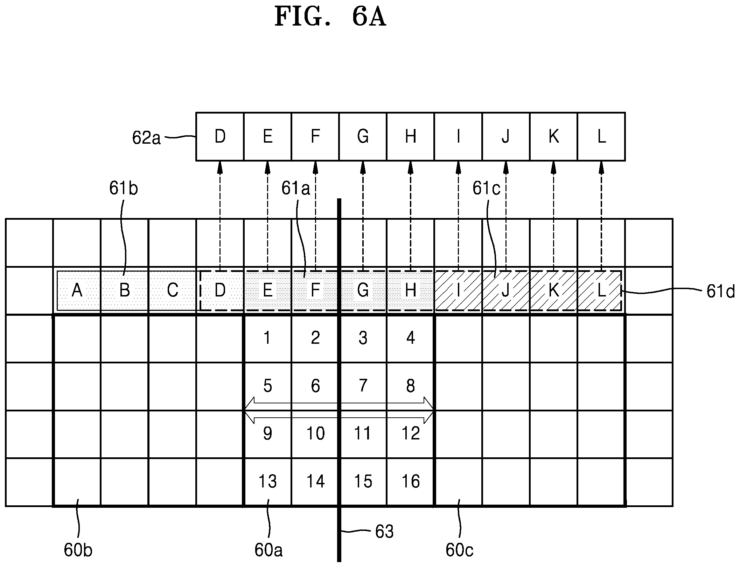

FIG. 6A illustrates a process of changing samples being referred to while the image encoding apparatus 10 performs prediction during encoding processes, according to an embodiment.

According to an embodiment, the encoder 12 of the image encoding apparatus 10 may determine a type of prediction to be performed in a coding unit. For example, it may be determined whether intra prediction or inter prediction is to be performed on a current coding unit or prediction is to be performed by referring to pictures on different layers, based on prediction mode information including information indicating a type of a prediction mode to be performed in the current coding unit. When a prediction mode of a coding unit is determined to be an intra prediction mode, intra prediction may be performed based on information about an intra prediction type. For example, the information about the intra prediction type may include a location of a reference sample for intra prediction or a syntax for distinguishing a method of performing intra prediction based on a determined reference sample. Here, sizes of a prediction unit and transformation unit may be determined based on a size of a coding unit including the prediction unit and the transformation unit. Also, a compression unit according to an embodiment may correspond to a unit for a separate process, which is different from a coding unit, a prediction unit, and a transformation unit. However, for convenience of description, it is assumed that a size of a current compression unit corresponds to a size of a current transformation unit.

The encoder 12 of the image encoding apparatus 10 according to an embodiment may refer to a reference sample adjacent to a current transformation unit during intra prediction processes. Referring to FIG. 6A, when prediction is performed on a transformation unit corresponding to samples of a 4x4 size, the encoder 12 may determine adjacent samples as reference samples to use then during processes of performing the prediction. When the encoder 12 performs intra prediction, the encoder 12 may determine a location of a sample referred to during prediction processes or determine a method of performing prediction based on a determined reference sample, based on the information about the prediction type. For example, information about an intra prediction type may indicate that samples in a right diagonal direction are reference samples. However, which one of the samples in the right diagonal direction is to be referred to is indicated by the information about the prediction type, and may vary according to an angle difference of the prediction sample and the reference sample. Accordingly, an intra prediction method should not be interpreted limitedly to the prediction method of FIG. 6A.

According to an embodiment, the encoder 12 of the image encoding apparatus 10 may determine a main array 62a by using the reference sample according to the prediction mode, during intra prediction. Referring to FIG. 6A, the encoder 12 may perform the prediction by using the reference sample included in the main array 62a, and the main array 62a may include samples adjacent to a current transformation unit 60a. Samples from among the samples adjacent to the current transformation unit to be included in the main array 62a and used during the prediction processes may be determined according to the intra prediction type. For example, when an intra prediction direction corresponds to a vertical or right upward direction in the current transformation unit 60a, some of adjacent reference samples 61a through 61c above the current transformation unit 60a may be included in the main array 62a and used during the prediction processes. For example, from among the adjacent reference samples 61 a through 61 c above the current transformation unit 60a, reference samples 61 d including the samples 61 a adjacent to an upper portion of the current transformation unit 60a, some of samples 61 b adjacent to an upper portion of a left transformation unit 60b of the current transformation unit 60a, and samples 61 c adjacent to an upper portion of a right transformation unit 60c of the current transformation unit 60a may be included in the main array 62a used during the prediction processes of the current transformation unit 60a.

According to an embodiment, the encoder 12 of the image encoding apparatus 10 may change the plurality of samples included in the current transformation unit 60a for performing intra prediction. A base unit for changing the plurality of samples may be a compression unit, and the compression unit may be a sequence, a picture, a slice, a slice segment, a coding unit, a prediction unit, or a transformation unit, but is not limited thereto and may be another data unit. However, for convenience of description, the compression unit may correspond to a transformation unit.

According to an embodiment, the encoder 12 of the image encoding apparatus 10 may use a flipping scheme as a scheme for changing the plurality of samples included in the current transformation unit 60a corresponding to a compression unit. The encoder 12 may change locations of the plurality of samples via the flipping scheme based on a line 63 splitting the plurality of samples based on the compression unit. Since a method of changing the locations by flipping the plurality of samples of the current transformation unit 60a corresponding to the compression unit has been described above, details thereof are not provided again. Here, samples adjacent to a current compression unit may be defined as samples included in other compression units adjacent to the current compression unit based on a compression unit.

According to an embodiment, when the current transformation unit 60a is determined to correspond to a compression unit, the encoder 12 of the image encoding apparatus 10 may not only change the plurality of samples included in the current transformation unit 60a, but also change a plurality of samples adjacent to the current transformation unit 60a via a scheme corresponding to the scheme of changing the plurality of samples included in the current transformation unit 60a. For example, when the plurality of samples included in the current transformation unit 60a are flipped, the encoder 12 may change a plurality of samples adjacent to a compression unit corresponding to the current transformation unit 60a via the flipping scheme. In other words, referring to FIG. 6A, the encoder 12 may change the samples 61 a adjacent to the upper portion of the current transformation unit 60a, the samples 61 b adjacent to the upper portion of the left transformation unit 60b of the current transformation unit 60a, and the samples 61 c adjacent to the upper portion of the right transformation unit 60c of the current transformation unit 60a.

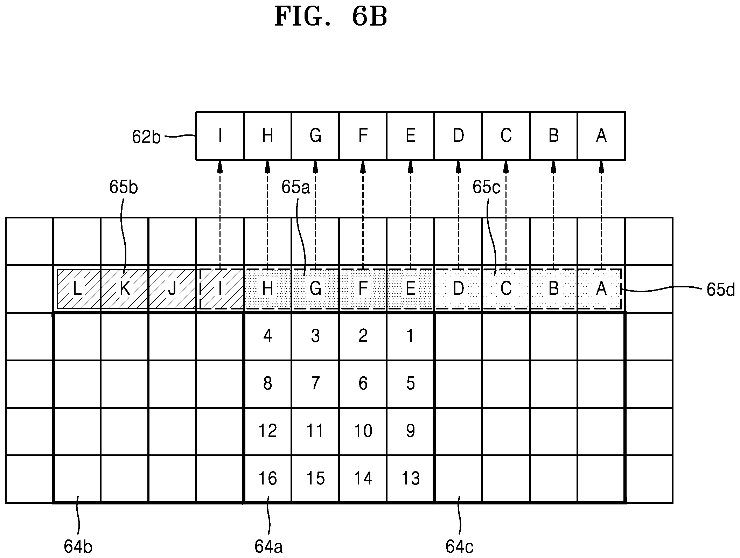

FIG. 6B illustrates a process of performing prediction by using a result of changing, by the encoder 12 of the image encoding apparatus 10, locations of samples adjacent to the current compression unit 60a, according to an embodiment. According to an embodiment, the encoder 12 may change the locations of the samples 61a through 61 c adjacent to the current transformation unit 60a via the flipping scheme. For example, the locations of the samples 61a through 61c may be changed left and right based on the line 63 splitting the current transformation unit 60a. FIG. 6B illustrates a result of changing the samples included in the current transformation unit 60a and the samples 61 a through 61 c adjacent to the current transformation unit 60a via the flipping scheme. The encoder 12 may obtain a flipped transformation unit 64a by changing the left and right of the current transformation unit 60a. In addition, the encoder 12 may obtain changed adjacent samples 65a through 65c by reversing locations of samples adjacent to the current transformation unit 60a at left and right of the line 63.

According to an embodiment, the encoder 12 of the image encoding apparatus 10 may perform prediction by referring to reference samples included in a main array 62b during processes of performing prediction on the current transformation unit 60a, as in FIG. 6A. In addition, referring to FIG. 6B, the encoder 12 may change samples based on a compression unit before performing the prediction, and perform the prediction based on a result of the changing. In other words, a reference sample being referred to by the encoder 12 during the prediction processes performed on the current transformation unit 60a may differ based on whether the changing is performed. For example, referring to FIG. 6A, the encoder 12 may not perform a change according to a flipping scheme according to an embodiment, but may determine the main array 62a based on a plurality of samples adjacent to the current transformation unit 60a and information about an intra prediction type to refer to the reference samples 61 d included in the main array 62a during the prediction processes. Also, referring to FIG. 6B, the encoder 12 may preform a change according to a flipping scheme according to an embodiment, and determine the main array 62b based on a changed plurality of samples and information about an intra prediction type to refer to reference samples 65d included in the main array 62b during the prediction processes.

Referring to FIGS. 6A and 6B, since the encoder 12 determines the reference samples to be included in the main arrays 62a and 62b based on the information about the intra prediction type, locations of the reference samples referred to by the current transformation units 60a and 64a are the same regardless of whether the plurality of samples are changed. When the plurality of samples are changed according to the changing scheme, such as sampling or flipping, performed by the encoder 12, sample values of the samples existing at the locations determined by the information about the intra prediction type may change. Accordingly, even when the image encoding apparatus 10 performs prediction according to one intra prediction type, the reference samples are varies according to the changing scheme performed by the encoder 12, and thus the prediction processes may be performed by referring to relatively various samples. For example, the locations of reference samples determined n FIG. 6A and the locations of reference samples determined in FIG. 6B are the same based on the current transformation units 60a and 64a. However, in FIG. 6A, the plurality of samples are before being changed by the encoder 12 according to the flipping scheme, and in FIG. 6B, the plurality of samples are after being changed by the encoder 12 according to the flipping scheme, and thus values of the reference samples are different. Accordingly, the main array 62a of FIG. 6A may sequentially include a $D^{th}$ sample through an $L^{th}$ sample, whereas the main array 62b of FIG. 6A may sequentially include an $I^{th}$ sample through an $A^{th}$ sample. According to various embodiments, prediction may be performed via a scheme that is relatively more effective and flexible than a scheme that was used during existing prediction processes.

Referring to FIGS. 6A and 6B, at least one reference sample around the current compression unit may be changed according to the changing scheme of the current compression unit while the image encoding apparatus 10 determines the reference samples for the prediction. However, according to an embodiment, the image encoding apparatus 10 may restore the changed at least one reference sample to an original state after the prediction processes performed on the plurality of samples of the current compression unit are completed.

According to an embodiment, the image encoding apparatus 10 may perform the prediction by referring to a reference frame for inter prediction. When the change performed by the image encoding apparatus 10 is performed, a plurality of samples of the reference frame for inter prediction may be changed via a scheme corresponding to the changing scheme of the current compression unit. In other words, the image encoding apparatus 10 may change a compression unit on the reference frame, which corresponds to a compression unit of a current frame, via the same scheme as the method for changing a plurality of sample value of the compression unit of the current frame, and perform inter prediction based on a result of the changing. A location of the compression unit on the reference frame may be determined by referring a motion vector related to the compression unit of the current frame.

As described above, the image encoding apparatus 10 may determine a compression unit having various shapes, and change a plurality of samples based on the determined compression unit. The image encoding apparatus 10 may improve encoding efficiency by performing encoding based on the changed samples. Hereinafter, an image decoding apparatus 15 corresponding to the image encoding apparatus 100 will be described.

FIG. 1B is a block diagram of the image decoding apparatus 15 according to an embodiment. The image decoding apparatus 15 may include an information obtainer 16 and a decoder 18 as components for decoding an image. Details about an image decoding method performed in the image decoding apparatus 15 by the information obtainer 16 and the decoder 18 will be described through various embodiments below.

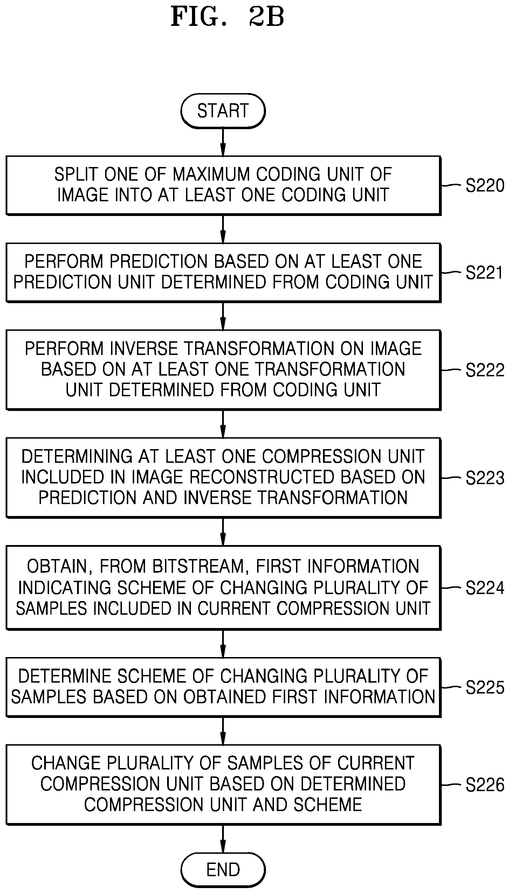

FIG. 2B is a flowchart of an image decoding method performed by the image decoding apparatus 15, according to an embodiment.

In operation S220, the image decoding apparatus 15 may split one of maximum coding units included in an image into at least one coding unit. For example, the decoder 18 may determine the maximum coding units of the image, and split one of the determined maximum coding units into at least one coding unit. According to an embodiment, the decoder 18 may determine the maximum coding units of the image based on information about a largest size of a coding unit, and split one of the determined maximum coding units into at least one coding unit according to split information of a coding unit. The decoder 18 may split the maximum coding unit to a quad tree structure according to the split information, and at least one coding unit may be included in the split maximum coding unit.

In operation S221, the image decoding apparatus 15 may determine at least one prediction unit determined from the coding unit, and perform prediction based on the determined prediction unit. According to an embodiment, the decoder 18 may obtain, from a bitstream, information about a partition type that is a shape of the prediction unit included in the coding unit determined in operation S220, and determine the at least one prediction unit related to the coding unit based on such partition type information. Since prediction processes performed by the decoder 18 may be described by various embodiments described above or below, details thereof are not provided here.

In operation S222, the image decoding apparatus 15 may perform inverse transformation on the image based on a transformation unit determined from the coding unit. According to an embodiment, at least one transformation unit may be determined from the coding unit by using split information of a transformation unit, which indicates whether a transformation unit of a current depth corresponding to a depth of the coding unit determined in operation S220 is split into transformation units of a lower depth. The decoder 18 may determine, from a current coding unit, the at least one transformation unit that may be determined in a form corresponding to the coding unit or determined by being split from a coding unit. In other words, the decoder 18 may determine, according to the split information of a transformation unit, whether the transformation unit is to be determined as a transformation unit of a lower depth by being split into a plurality of transformation units, or whether the transformation unit with respect to the current coding unit is to be determined as a transformation unit of a shape corresponding to the coding unit as a depth of the transformation unit is determined to be a current depth. According to an embodiment, the inverse transformation performed by the decoder 18 may correspond to processes of inverse-transforming a differential signal of the image. In operation S223, the image decoding apparatus 15 may reconstruct the image based on prediction and inverse transformation, and moreover, determine at least one compression unit included in the reconstructed image. According to an embodiment, the image decoding apparatus 15 may pre-perform an arbitrary processing process on the image to be decoded, based on the compression unit. The image decoding apparatus 15 may determine a pre-determined arbitrary unit as the compression unit, or may adaptively determine the compression unit according to characteristics of the image to be processed. Hereinafter, for convenience of description, one or more embodiments will be described based on a compression unit having a certain size, but are not limited thereto.

The compression unit that may be determined by the image decoding apparatus 15 according to an embodiment may vary. For example, various units that may be used during image decoding processes may be provided as the compression unit. Moreover, for decoding efficiency improvement, the compression unit used by the image decoding apparatus 15 may correspond to the compression unit used by the image encoding apparatus 10 during the encoding processes. The image decoding apparatus 15 may obtain information about the size of the compression unit from the bitstream received from the image encoding apparatus 10 through the information obtainer 16. Various embodiments described hereinafter are described based on the premise that the compression unit used by the image decoding apparatus 15 is a coding unit.

In operation S224, the information obtainer 16 of the image decoding apparatus 15 may obtain, from the bitstream, first information indicating a scheme of changing a plurality of samples included in a current compression unit.

A scheme of changing, by the decoder 18 of the image decoding apparatus 15, the plurality of samples may vary. Hereinafter, some of various embodiments will be described but the present disclosure may not be limitedly interpreted by such changing schemes.

FIG. 3A illustrates the sampling scheme as the scheme of changing the plurality of samples included in the current compression unit 30a, according to an embodiment. Here, the sample scheme may be defined to be a scheme of rearranging locations of a plurality of samples included in a compression unit such that odd$^{th}$ or even$^{th}$ samples based on rows or columns from among the plurality of samples included in the compression unit according to an embodiment are processed together.

Referring to FIG. 3A, the decoder 18 of the image decoding apparatus 15 may determine the at least one compression unit included in the image, and determine one of the at least one compression unit as a current compression unit 30a. According to an embodiment, the determined current compression unit 30a may correspond to a coding unit used by the image decoding apparatus 15 during decoding processes, but a compression unit may not be limitedly interpreted thereby.

According to an embodiment, the decoder 18 may determine the reconstructed compression unit 30a including the samples 31 a and 31 b that were in the odd$^{th}$ columns and the samples 32a and 32b that were in the even$^{th}$ columns by using a plurality of samples of the current compression unit 30e obtained by performing the inverse transformation. For example, the decoder 18 may change the locations of the plurality of samples such that the samples 31c in left two columns of the current compression unit 30e are arranged at the samples 31 a and 31 b in the odd$^{th}$ columns of the reconstructed compression unit 30a, and samples 31 b in right two columns of the current compression unit 30e are arranged at the samples 32a and 32b in the even$^{th}$ columns of the reconstructed compression unit 30a. Since such processes may correspond to reverse processes of the changing scheme performed by the image encoding apparatus 10, details thereof are not provided again.

FIG. 3B illustrates the changing scheme including the processes of changing the locations of the plurality of samples of the current compression unit 30f and changing the value of the sample. According to an embodiment, the decoder 18 may decode the plurality of samples included in the current compression unit 30f by changing the locations of the plurality of samples included in the current compression unit 30f obtained by performing the inverse transformation, and changing the values of the samples. Referring to FIG. 3B, the decoder 18 may determine the reconstructed compression unit 30b including the samples 33a and 33b that are in the odd$^{th}$ columns and the samples 34a and 34b that are in the even$^{th}$ columns by changing the locations of the plurality of samples of the current compression unit 30f obtained via the inverse transformation.

Moreover, the decoder 18 may determine the values of the samples 34a and 34 in the even[th] columns of the reconstructed compression unit 30b by using the values of the samples 33a and 33b in the odd[th] columns. For example, the first sample 33c and the third sample 33d from among the samples included in the current compression unit 30f before being changed may be samples that were located in the first and third columns, i.e., the odd[th] columns, from among the plurality of samples of the current compression unit 30f before being changed. The values of the second sample 34c in the even[th] column from among the samples located in the same row may be determined by using the values of the first and third samples 33c and 33d. For example, according to the changing scheme during the encoding processes of the image encoding apparatus 10, the value of the second sample 34c may correspond to the average of the values of the first and third samples 33c and 33d. Accordingly, the decoder 18 may determine the changed current compression unit by performing reverse processes of the changing performed by the image encoding apparatus 10 based on such a relationship. For example, the decoder 18 may determine the values of the plurality of samples through arithmetic calculating processes using the restored sample values. Here, the samples 34a and 34b that were in the even[th] columns may be determined by using the samples 33a and 33b that were in the odd[th] columns, and thus the decoder 18 may efficiently manage a bandwidth since image decoding is possible even when only the samples 33a and 33b that were in the odd[th] columns are exchanged.

FIG. 3C illustrates another example of the sampling scheme as the scheme of changing the plurality of samples included in the current compression unit 30g, according to an embodiment.

Referring to FIG. 3C, the decoder 18 may determine the changed compression unit 30c including the samples 35a and 35b that are in the odd[th] rows and the samples 36a and 36b that are in the even[th] rows by changing the plurality of samples so as to restore the plurality of samples of the current compression unit 30g obtained via the inverse transformation. In other words, the decoder 18 may determine the changed compression unit 30c by performing a change corresponding to reverse processes of the sampling scheme performed by the image encoding apparatus 10 on the current compression unit 30g.

Moreover, the decoder 18 may determine the values of the samples 36a and 36b that are in the even[th] rows of the changed compression unit 30c by using the values of the samples 35a and 35b that are in the odd[th] rows. For example, the first sample 35c and the ninth sample 35d from among the samples included in the current compression nit 30g before being changed may be samples that are respectively located in the first and third rows, i.e., the odd[th] rows, from among the plurality of samples of the current compression unit 30g before being changed. The value of the fifth sample 36c in the even[th] row from among the samples located in the same column may be determined by using the values of the first sample 35c and the ninth sample 35d. For example, the value of the fifth sample 36c may correspond to the average of the values of the first and ninth samples 35c and 35d. Moreover, the decoder 18 may also determine the value of the thirteenth sample 36d that were in the even[th] column from among the samples located in the same row by using the values of the first and ninth samples 35c and 35d. Alternatively, the value of the thirteenth sample 36d may be determined by using the value of the fifth sample 36c determined based on the values of the first and ninth samples 35c and 35d. For example, the decoder 18 may obtain the value of the thirteenth sample 36d by arithmetically calculating the value of the fifth sample 36c. Accordingly, the samples 36a and 36b that were in the even[th] rows may be determined by using the samples 35a and 35b that were in the odd[th] rows, and thus the decoder 18 may efficiently manage a bandwidth since image decoding is possible even when only the samples 35a and 35b that were in the odd[th] columns are exchanged.

FIG. 3D illustrates the processes of arranging the plurality of samples included in the current compression unit 30d by sampling the plurality of samples, and changing the sample values, according to an embodiment.

Referring to FIG. 3D, the decoder 18 may change the samples of the current compression unit 30h before being changed to determine the samples of the changed compression unit 30d after being changed, which include the samples 37a and 37b in the odd[th] rows and the samples 38a and 38b in the even[th] rows and the samples 37c and 37d in the odd[th] columns and the samples 38c and 38d in the even[th] columns. In other words, the decoder 18 may determine the changed compression unit 30d by performing all processes performed by the decoder 18 described above with reference to FIGS. 3A and 3B, with respect to the plurality of samples of the current compression unit 30h.

In addition, the decoder 18 may determine the values of the samples 38a and 38b in the even[th] rows of the changed compression unit 30d, in which the locations of the plurality of samples are changed, by using the values of the samples 37a and 37b in the odd[th] rows. For example, the first sample 39a and the ninth sample 39c from among the samples included in the current compression unit 30h may be samples respectively located in the first row 37a and the third row 37b, i.e., the odd[th] rows, from among the plurality of samples of the current compression unit 30h. The value of the fifth sample 39f that were in the even[th] row from among the samples located in the same column may be determined by using the values of the first sample 39a and the ninth sample 39c. For example, the decoder 18 may determine the changed compression unit 30d by determining the value of the fifth sample 39f to be the average value of the values of the first and ninth samples 39a and 39c. Here, since such an embodiment may correspond to that described with reference to FIG. 3B, details thereof are not provided. Also, the decoder 18 may change the samples of the current compression unit 30d via the sampling scheme by classifying the plurality of samples of the current compression unit 30h into the samples 37a and 37b in the odd[th] columns and the samples 38a and 38b in the even[th] columns. Moreover, the decoder 18 may determine the values of the samples 38a and 38b in the even[th] columns of the current compression unit 30d by using the values of the samples 37a and 37b in the odd[th] columns. For example, the first sample 39a and the third sample 39b from among the samples included in the current compression unit 30h may be samples located in the first column 37c and the third column 37d, i.e., the odd[th] columns, from among the plurality of samples of the current compression unit 30h. The value of the second sample 39e that was in the even[th] column from among the samples located in the same row may be determined by using the values of the first and third samples 39a and 39b. For example, the decoder 18 may determine the changed compression unit 30d by determining the value of the second sample 39e to be the average value of the values of the first and third samples 39a and 39b. Here, since such an embodiment may correspond to that described with reference to FIG. 3C, details thereof are not provided.

According to an embodiment, the decoder 18 may change the samples in the even[th] rows and even[th] columns of the current compression unit 30d before being changed by using other adjacent samples. For example, referring to FIG. 3D, the changed compression unit 30d may be determined by changing the sixth sample 39g located in the second row 38a and the second column 38c based on samples located in an adjacent odd[th] row and an adjacent odd[th] column. In detail, the value of the sixth sample 39g may be changed to a value corresponding to an average value of the first sample 39a located in the first row and the first column, the third sample 39b located in the first row and the third column, the ninth sample 39c located in the third row and the first column, and the eleventh sample 39d located in the third row and the third column.

According to an embodiment, the decoder 18 may change a sample value of another sample based on changed sample values of samples. For example, referring to FIG. 3D, the sample value of the eighth sample 39h located in the second row 38a and the fourth column 38d of the current compression unit 30h may be changed based on the samples located in the adjacent odd[th] row and the adjacent odd[th] column. In detail, the sample value of the eighth sample 39h of the current compression unit 30h may be changed based on the sample value of the sixth sample39g located in the second row 38a and the second column 38c. For example, the changed compression unit 30d may be determined by changing the value of the eighth sample 39h to a value changed by arithmetically calculating the sample value of the sixth sample 39g.

FIG. 4A illustrates an example of the flipping scheme as the scheme of changing, by the image decoding apparatus 15, the locations of the plurality of samples included in the current compression unit 40a, according to an embodiment.

Referring to FIG. 4A, the decoder 18 may change the locations of the samples such that left and right of the plurality of samples included in the current compression unit 40a are changed. For example, the first sample 41 a located in the first row and the fourth column of the current compression unit 40b may be disposed by the decoder 18 in the first row and the first column so as to be located at the opposite side based on the line 40c splitting the current compression unit 40b in halves. As another example, the second sample 41 b located in the first row and the third column of the current compression unit 40b may be disposed by the decoder 18 in the first row and the second column so as to be located at the opposite side based on the line 40c splitting the current compression unit 40b in halves. As a result, the decoder 18 may horizontally flip the plurality of samples of the current compression unit 40a obtained by performing the inverse transformation to obtain the flipped compression unit 40a. However, since the current embodiment is only an example for describing a changing scheme of a compression unit of the present disclosure, a flipping changing scheme of changing a plurality of sample locations of a compression unit should not be limited to above, and flipping directions and standards may vary.

FIG. 4B illustrates another example of the flipping scheme as the scheme of changing, by the image decoding apparatus 15, the locations of the plurality of samples included in the current compression unit 40e, according to an embodiment.

Referring to FIG. 4B, the decoder 18 may change the locations of the samples such that the locations of the plurality of samples included in the current compression unit 40e may be changed in the diagonal direction. For example, the first sample 42a located in the fourth row and the fourth column of the current compression unit 40e may be disposed by the decoder 18 in the first row and the first column so as to be located at the opposite side based on the line 40f splitting the current compression unit 40e in halves. As another example, the second sample 42b located in the third row and the fourth column of the current compression unit 40d may be disposed by the decoder 18 in the first row and the second column so as to be located at the opposite side based on the line 40f splitting the current compression unit 40e in halves. As a result, the decoder 18 may diagonally flip the plurality of samples of the current compression unit 40d to obtain the flipped compression unit 40e. However, since the current embodiment is only an example for describing a changing scheme of a compression unit of the present disclosure, a flipping changing scheme of changing a plurality of sample locations of a compression unit should not be limited to above, and flipping directions and standards may vary. Accordingly, an angle or location of a line that is a base of a flipping changing method in a diagonal direction may vary.

FIG. 4C illustrates an example of the rotating scheme as the scheme of changing, by the image decoding apparatus 15, the locations of the plurality of samples included in the current compression unit 40h, according to an embodiment.

Referring to FIG. 4C, the decoder 18 may change the locations of the samples via a scheme in which the locations of the plurality of samples included in the current compression unit 40h are rotated in the current compression unit 40h. For example, the decoder 18 may change the location of the first sample 43a to the first row and the first column of the current compression unit 40h by rotating the plurality of samples including the first sample 43a located in the first row and the fourth column of the current compression unit 40h in a counterclockwise direction. As another example, the decoder 18 may change the location of the second sample 43b to the first row and the second column by rotating the plurality of samples including the second sample 43b located in the second row and the fourth column of the current compression unit 40h in the counterclockwise direction. As a result, the current compression unit 40g may be changed to the compression unit 40g in which the plurality of samples of the current compression unit 40h are rotated in the counterclockwise direction by the decoder 18. However, since the current embodiment is only an example for describing a changing scheme of a compression unit of the present disclosure, a rotating changing scheme of changing a plurality of sample locations of a compression unit should not be limited to above. In other words, a rotation direction may be a clockwise direction or a counterclockwise direction, and a rotating angle may also vary.

According to an embodiment, the image decoding apparatus 15 may change sample values of a plurality of samples included in a current compression unit according to a certain method. For example, the decoder 18 may change the plurality of samples included in the current compression unit via a scheme, such as filtering, transformation, and deformation.

According to an embodiment, a type of a filter used to change a sample value via filtering may vary, such as a low pass filter and a high pass filter.

According to an embodiment, when a sample value is changed via a transformation scheme, the image decoding apparatus 15 may change the sample value via an algorithm of various schemes according to DCT, or may change a sample value according to FFT.

When a sample value is changed according to a deformation scheme according to an embodiment, the image decoding apparatus 15 may distort an image shown in a current compression unit by changing sample values of a plurality of samples included in the current compression unit. For example, the image decoding apparatus 15 may change the sample values of the plurality of samples included in the current compression unit via a scheme of reducing or reinforcing distortion shown in an image to be encoded by using parameter information related to the image, such as a focus distance or an iris value as camera parameter information. The image decoding apparatus 15 may change locations of the plurality of samples having sample values changed according to the certain method. Since a method of changing locations of a plurality of samples may correspond to various embodiments described above through drawings, details thereof are not provided.

In operation S224, the information obtainer 16 of the image decoding apparatus 15 may obtain, from the bitstream, the first information indicating the scheme of changing the plurality of samples included in the current compression unit. Upon obtaining the first information about the changing scheme related to the current compression unit, the image decoding apparatus 15 may increase decoding efficiency during the decoding processes by performing a change by using a reverse scheme of the changing scheme performed during encoding processes. Information about such a changing scheme may correspond to a form of a flag or index, and may be transmitted according to compression units of various shapes, such as sequences, frames, slices, slice segments, maximum coding units, coding units, prediction units, and transformation units.

According to an embodiment, the image decoding apparatus 15 may determine a changing scheme for decoding efficiency optimized according to compression units, from among various changing schemes. For example, the image decoding apparatus 15 may determine a scheme having excellent efficiency by examining a rate distortion cost with respect to the current compression unit.

In operation S225, the image decoding apparatus 15 may determine a changing scheme to be performed by the image decoding apparatus 15 on the plurality of samples included in the compression unit based on the first information obtained in operation S224.

In operation S226, the image decoding apparatus 15 may change the plurality of samples of the current compression unit based on the compression unit determined in operation S223 and the scheme determined in operation S225.

FIG. 5A illustrates processes of, when the locations of the plurality of samples of the current compression unit are changed to decode an image, changing the samples of the compression unit adjacent to the current compression unit 50c, according to an embodiment.

According to an embodiment, the decoder 18 of the image decoding apparatus 15 may change the plurality of samples included in the current compression unit 50c, and may change the adjacent samples 50d adjacent to the current compression unit 50c via a scheme corresponding to a scheme of changing the current compression unit 50c. Referring to FIG. 5A, the image decoding apparatus 15 may change the plurality of samples included in the current compression unit 50c via the sampling scheme. Details about the sampling scheme may be details about various embodiments described above, and thus descriptions thereof are not provided. Here, the adjacent samples changed together according to the changing scheme of the current compression unit 50c may be samples that are not changed according to an embodiment.

According to an embodiment, the decoder 18 may determine the changed compression unit 50a by changing the plurality of samples of the current compression unit 50c to be classified into the samples included in the odd[th] rows 51 a and 51 b and the samples in the even[th] rows. In other words, the decoder 18 may change not only the plurality of samples included in the current compression unit 50c but also the samples 50d of another compression unit adjacent to the current compression unit 50c via the same scheme. For example, the decoder 18 may change the adjacent samples 50d adjacent to the left boundary of the current compression unit 50a according to the sampling scheme of changing the current compression unit 50d, thereby disposing samples 51c located at the upper portion and samples 52c located at the lower portion, from among the samples of the current compression unit 50c and the adjacent samples respectively to the ath and cth samples located in the odd[th] rows and the bth and dth samples located in the even[th] rows.

FIG. 5B illustrates another scheme of, when the locations of the plurality of samples of the current compression unit 53c are changed to decode an image, changing the samples of the compression unit adjacent to the current compression unit 53c, according to an embodiment. Referring to FIG. 5B, the image decoding apparatus 16 may change the plurality of samples included in the current compression unit 53c via a flipping scheme. Since details about the flipping scheme may be details about various embodiments described above, descriptions thereof are not provided. Here, adjacent samples changed together according to the changing scheme of the current compression unit 53c may be samples that are not changed according to an embodiment.

According to an embodiment, the decoder 18 may use the flipping scheme so as to change the arrangement of the plurality of samples included in the current compression unit 53c. The decoder 18 may change the left and right locations of the plurality of samples of the current compression unit 53c based on the baseline 53e according to the flipping scheme. Accordingly, the location of the first sample 54a located in the first row and the fourth column may be changed to the location in the first row and the first column, and the location of the third sample 54b located in the first row and the second column may be changed to the location in the first row and the third column. In addition, the decoder 18 may change not only the plurality of samples included in the current compression unit 53c, but also samples of another compression unit adjacent to the current compression unit 53c, via the same scheme. For example, the decoder 18 may change the locations of the adjacent samples 53d adjacent to the upper boundary of the current compression unit 53c according to the flipping scheme of the current compression unit 53c. Accordingly, the location of the ath sample 55a located in the fourth column of the adjacent samples 53d may be changed to the location corresponding to the first column, and the location of a cth sample 55b located in the second column may be changed to the location corresponding to the third column.

FIG. 6A illustrates a process of changing samples being referred to while performing prediction by the image decoding apparatus 15, according to an embodiment.

According to an embodiment, the decoder 18 of the image decoding apparatus 15 may determine a type of prediction to be performed in a coding unit based on a prediction unit. For example, it may be determined whether intra prediction or inter prediction is to be performed on a current coding unit or prediction is to be performed by referring to pictures on different layers, based on prediction mode information including information indicating a type of a prediction mode to be performed in the current coding unit. When a prediction mode of a coding unit is determined to be an intra prediction mode, intra prediction may be performed based on information about an intra prediction type. For example, the information about the intra prediction type may include a location of a reference sample for intra prediction or a syntax for distinguishing a method of performing intra prediction based on a determined reference sample. Here, sizes of a prediction unit and transformation unit may be determined based on a size of a coding unit including the prediction unit and the transformation unit. Also, a compression unit according to an embodiment may correspond to a unit for a separate process, which is different from a coding unit, a prediction unit, and a transformation unit. However, for convenience of description, it is assumed that a size of a current compression unit corresponds to a size of a current transformation unit.

The decoder 18 of the image decoding apparatus 15 according to an embodiment may refer to a reference sample adjacent to a current transformation unit during intra prediction processes. Referring to FIG. 6A, when prediction is performed on a transformation unit corresponding to samples of a 4x4 size, the decoder 18 may determine adjacent samples as reference samples to use then during processes of performing the prediction. When the decoder 18 performs intra prediction, the decoder 18 may determine a location of a sample referred to during prediction processes or determine a method of performing prediction based on a determined reference sample, based on the information about the prediction type. For example, information about an intra prediction type may indicate that samples in a right diagonal direction are reference samples. However, which one of the samples in the right diagonal direction is to be referred to is indicated by the information about the prediction type, and may vary according to an angle difference of the prediction sample and the reference sample. Accordingly, an intra prediction method should not be interpreted limitedly to the prediction method of FIG. 6A.

According to an embodiment, the decoder 18 of the image decoding apparatus 15 may determine the main array 62a by using the reference sample according to the prediction mode, during intra prediction. Referring to FIG. 6A, the decoder 18 may perform the prediction by using the reference sample included in the main array 62a, and the main array 62a may include samples adjacent to the current transformation unit 60a. Samples from among the samples adjacent to the current transformation unit to be included in the main array 62a and used during the prediction processes may be determined according to the intra prediction type. For example, when an intra prediction direction corresponds to a vertical or right upward direction in the current transformation unit 60a, some of the adjacent reference samples 61 a through 61 c above the current transformation unit 60a may be included in the main array 62a and used during the prediction processes. For example, from among the adjacent reference samples 61 a through 61 c above the current transformation unit 60a, the reference samples 61 d including the samples 61a adjacent to the upper portion of the current transformation unit 60a, some of the samples 61 b adjacent to the upper portion of the left transformation unit 60b of the current transformation unit 60a, and the samples 61 c adjacent to the upper portion of the right transformation unit 60c of the current transformation unit 60a may be included in the main array 62a used during the prediction processes of the current transformation unit 60a.

According to an embodiment, the decoder 18 of the image decoding apparatus 15 may change the plurality of samples included in the current transformation unit 60a for performing intra prediction. A base unit for changing the plurality of samples may be a compression unit, and the compression unit may be a sequence, a picture, a slice, a slice segment, a coding unit, a prediction unit, or a transformation unit, but is not limited thereto and may be another data unit. However, for convenience of description, the compression unit may correspond to a transformation unit.

According to an embodiment, the decoder 18 of the image decoding apparatus 15 may use a flipping scheme as a scheme for changing the plurality of samples included in the current transformation unit 60a corresponding to a compression unit. The decoder 18 may change locations of the plurality of samples via a flipping scheme based on the line 63 splitting the plurality of samples based on the compression unit. Since a method of changing the locations by flipping the plurality of samples of the current transformation unit 60a corresponding to the compression unit has been described above, details thereof are not provided again. Here, samples adjacent to a current compression unit may be defined as samples included in other compression units adjacent to the current compression unit based on a compression unit.

According to an embodiment, when the current transformation unit 60a is determined to correspond to a compression unit, the decoder 18 of the image decoding apparatus 15 may not only change the plurality of samples included in the current transformation unit 60a, but also change a plurality of samples adjacent to the current transformation unit 60a via a scheme corresponding to the scheme of changing the plurality of samples included in the current transformation unit 60a. For example, when the plurality of samples included in the current transformation unit 60a are flipped, the decoder 18 may change a plurality of samples adjacent to a compression unit corresponding to the current transformation unit 60a via the flipping scheme. In other words, referring to FIG. 6A, the decoder 18 may change the samples 61 a adjacent to the upper portion of the current transformation unit 60a, the samples 61 b adjacent to the upper portion of the left transformation unit 60b of the current transformation unit 60a, and the samples 61 c adjacent to the upper portion of the right transformation unit 60c of the current transformation unit 60a.

FIG. 6B illustrates a process of performing prediction by using a result of changing, by the decoder 18 of the image decoding apparatus 15, locations of samples adjacent to the current compression unit, according to an embodiment. According to an embodiment, the decoder 18 may change the locations of the samples 61 a through 61 c adjacent to the current transformation unit 60a via the flipping scheme. For example, the locations of the samples 61 a through 61 c may be changed left and right based on the line 63 splitting the current transformation unit 60a. FIG. 6B illustrates a result of changing the samples included in the current transformation unit 60a and the samples 61 a through 61 c adjacent to the current transformation unit 60a via the flipping scheme. The decoder 18 may obtain the flipped transformation unit 64a by changing the left and right of the current transformation unit 60a. In addition, the decoder 18 may obtain the changed adjacent samples 65a through 65c by reversing locations of samples adjacent to the current transformation unit 60a at left and right of the line 63.

According to an embodiment, the decoder 18 of the image decoding apparatus 15 may perform prediction by referring to the reference samples included in the main array 62b during processes of performing prediction on the current transformation unit 60a, as in FIG. 6A. In addition, referring to FIG. 6B, the decoder 18 may change samples based on a compression unit before performing the prediction, and perform the prediction based on a result of the changing. In other words, a reference sample being referred to by the decoder 18 during the prediction processes performed on the current transformation unit 60a may differ based on whether the changing is performed. For example, referring to FIG. 6A, the decoder 18 may not perform a change according to a flipping scheme according to an embodiment, but may determine the main array 62a based on a plurality of samples adjacent to the current transformation unit 60a and information about an intra prediction type to refer to the reference samples 61 d included in the main array 62a during the prediction processes. Also, referring to FIG. 6B, the decoder 18 may preform a change according to a flipping scheme according to an embodiment, and determine the main array 62b based on a changed plurality of samples and information about an intra prediction type to refer to reference samples 65d included in the main array 62b during the prediction processes.

Referring to FIGS. 6A and 6B, since the decoder 18 determines the reference samples to be included in the main arrays 62a and 62b based on the information about the intra prediction type, locations of the reference samples referred to by the current transformation units 60a and 64a are the same regardless of whether the plurality of samples are changed. When the plurality of samples are changed according to the changing scheme, such as sampling or flipping, performed by the decoder 18, sample values of the samples existing at the locations determined by the information about the intra prediction type may change. Accordingly, even when the image decoding apparatus 15 performs prediction according to one intra prediction type, the reference samples are varies according to the changing scheme performed by the decoder 18, and thus the prediction processes may be performed by referring to relatively various samples. For example, the locations of reference samples determined n FIG. 6A and the locations of reference samples determined in FIG. 6B are the same based on the current transformation units 60a and 64a. However, in FIG. 6A, the plurality of samples are before being changed by the decoder 18 according to the flipping scheme, and in FIG. 6B, the plurality of samples are after being changed by the decoder 18 according to the flipping scheme, and thus values of the reference samples are different. Accordingly, the main array 62a of FIG. 6A may sequentially include a D$^{th}$ sample through an L$^{th}$ sample, whereas the main array 62b of FIG. 6A may sequentially include an I$^{th}$ sample through an A$^{th}$ sample. According to various embodiments, prediction may be performed via a scheme that is relatively more effective and flexible than a scheme that was used during existing prediction processes.

Referring to FIGS. 6A and 6B, at least one reference sample around the current compression unit may be changed according to the changing scheme of the current compression unit while the image decoding apparatus 15 determines the reference samples for the prediction. However, according to an embodiment, the image decoding apparatus 15 may restore the changed at least one reference sample to an original state after the prediction processes performed on the plurality of samples of the current compression unit are completed. The image decoding apparatus 15 may reconstruct the image by performing the prediction processes described above.

According to an embodiment, the image decoding apparatus 15 may perform the prediction by referring to a reference frame for inter prediction. When the change performed by the image decoding apparatus 15 is performed, a plurality of samples of the reference frame for inter prediction may be changed via a scheme corresponding to the changing scheme of the current compression unit. In other words, the image decoding apparatus 15 may change a compression unit on the reference frame, which corresponds to a compression unit of a current frame, via the same scheme as the method for changing a plurality of sample value of the compression unit of the current frame, and perform inter prediction based on a result of the changing. A location of the compression unit on the reference frame may be determined by referring a motion vector related to the compression unit of the current frame.

FIG. 7 illustrates a block diagram of a video encoding apparatus based on coding units of a tree structure 100, according to an embodiment. The video encoding apparatus 100 of FIG. 7 may correspond to the image encoding apparatus 10 of FIG. 1A.

The video encoding apparatus involving video prediction based on coding units of the tree structure 100 includes a coding unit determiner 120 and an output unit 130. Hereinafter, for convenience of description, the video encoding apparatus involving video prediction based on coding units of the tree structure 100 is referred to as the 'video encoding apparatus 100'.

The coding unit determiner 120 may split a current picture based on a maximum coding unit that is a coding unit having a maximum size for a current picture of an image. If the current picture is larger than the maximum coding unit, image data of the current picture may be split into the at least one maximum coding unit. The maximum coding unit according to an embodiment may be a data unit having a size of 32x32, 64x64, 128x128, 256x256, etc., wherein a shape of the data unit is a square having a width and length in squares of 2.

A coding unit according to an embodiment may be characterized by a maximum size and a depth. The depth denotes the number of times the coding unit is spatially split from the maximum coding unit, and as the depth deepens, deeper coding units according to depths may be split from the maximum coding unit to a smallest coding unit. A depth of the maximum coding unit may be defined as an uppermost depth and a depth of the smallest coding unit may be defined as a lowermost depth. Since a size of a coding unit corresponding to each depth decreases as the depth of the maximum coding unit deepens, a coding unit corresponding to an upper depth may include a plurality of coding units corresponding to lower depths.

As described above, the image data of the current picture is split into the maximum coding units according to a maximum size of the coding unit, and each of the maximum coding units may include deeper coding units that are split according to depths. Since the maximum coding unit according to an embodiment is split according to depths, the image data of a spatial domain included in the maximum coding unit may be hierarchically classified according to depths.

A maximum depth and a maximum size of a coding unit, which limit the total number of times a height and a width of the maximum coding unit are hierarchically split, may be predetermined.

The coding unit determiner 120 encodes at least one split region obtained by splitting a region of the maximum coding unit according to depths, and determines a depth to output a finally encoded image data according to the at least one split region. That is, the coding unit determiner 120 determines a final depth by encoding the image data in the deeper coding units according to depths, according to the maximum coding unit of the current picture, and selecting a depth having the least encoding error. The determined final depth and image data according to maximum coding units are output to the output unit 130.

The image data in the maximum coding unit is encoded based on the deeper coding units corresponding to at least one depth equal to or below the maximum depth, and results of encoding the image data based on each of the deeper coding units are compared. A depth having the least encoding error may be selected after comparing encoding errors of the deeper coding units. At least one final depth may be selected for each maximum coding unit.

The size of the maximum coding unit is split as a coding unit is hierarchically split according to depths, and as the number of coding units increases. Also, even if coding units correspond to the same depth in one maximum coding unit, it is determined whether to split each of the coding units corresponding to the same depth to a lower depth by measuring an encoding error of the image data of the each coding unit, separately. Accordingly, even when image data is included in one maximum coding unit, the encoding errors may differ according to regions in the one maximum coding unit, and thus the final depths may differ according to regions in the image data. Thus, one or more final depths may be determined in one maximum coding unit, and the image data of the maximum coding unit may be divided according to coding units of at least one final depth.

Accordingly, the coding unit determiner 120 according to the embodiment may determine coding units having a tree structure included in the maximum coding unit. The 'coding units having a tree structure' according to an embodiment include coding units corresponding to a depth determined to be the final depth, from among all deeper coding units included in the maximum coding unit. A coding unit of a final depth may be hierarchically determined according to depths in the same region of the maximum coding unit, and may be independently determined in different regions. Equally, a final depth in a current region may be independently determined from a final depth in another region.

A maximum depth according to an embodiment is an index related to the number of splitting times from a maximum coding unit to a smallest coding unit. A first maximum depth according to an embodiment may denote the total number of splitting times from the maximum coding unit to the smallest coding unit. A second maximum depth according to an embodiment may denote the total number of depth levels from the maximum coding unit to the smallest coding unit. For example, when a depth of the maximum coding unit is 0, a depth of a coding unit, in which the maximum coding unit is split once, may be set to 1, and a depth of a coding unit, in which the maximum coding unit is split twice, may be set to 2. Here, if the smallest coding unit is a coding unit in which the maximum coding unit is split four times, depth levels of depths 0, 1, 2, 3, and 4 exist, and thus the first maximum depth may be set to 4, and the second maximum depth may be set to 5.

Prediction encoding and transformation may be performed according to the maximum coding unit. The prediction encoding and the transformation are also performed based on the deeper coding units according to a depth equal to or less than the maximum depth, according to the maximum coding unit.

Since the number of deeper coding units increases whenever the maximum coding unit is split according to depths, encoding, including the prediction encoding and the transformation, is performed on all of the deeper coding units generated as the depth deepens. Hereinafter, for convenience of description, the prediction encoding and the transformation will be described based on a coding unit of a current depth in at least one maximum coding unit.

The video encoding apparatus 100 according to the embodiment may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but may also select a data unit different from the coding unit so as to perform the prediction encoding on the image data in the coding unit.

In order to perform prediction encoding in the maximum coding unit, the prediction encoding may be performed based on a coding unit of a final depth, i.e., based on the coding unit that is no longer split. A partition obtained by splitting a prediction unit may include a coding unit and a data unit obtained by splitting at least one selected from a height and a width of the coding unit. A partition may include a data unit where a coding unit is split, and a data unit having the same size as the coding unit. A partition that is a base of prediction may be referred to as a 'prediction unit'.

For example, when a coding unit of 2Nx2N (where N is a positive integer) is no longer split, it becomes a prediction unit of 2Nx2N, and a size of a partition may be 2Nx2N, 2NxN, Nx2N, or NxN. Examples of a partition mode may include symmetrical partitions obtained by symmetrically splitting a height or width of the prediction unit, and may selectively include partitions obtained by asymmetrically splitting the height or width of the prediction unit, such as 1:n or n:1, partitions obtained by geometrically splitting the prediction unit, partitions having arbitrary shapes, or the like.

A prediction mode of the prediction unit may be at least one of an intra mode, an inter mode, and a skip mode. For example, the intra mode and the inter mode may be performed on the partition of 2Nx2N, 2NxN, Nx2N, or NxN. Also, the skip mode may be performed only on the partition of 2Nx2N. The encoding may be independently performed on one prediction unit in a coding unit, so that a prediction mode having a minimum encoding error may be selected.

The video encoding apparatus 100 according to the embodiment may also perform the transformation on the image data in a coding unit based on not only the coding unit for encoding the image data, but also based on a data unit that is different from the coding unit. In order to perform the transformation in the coding unit, the transformation may be performed based on a data unit having a size smaller than or equal to the coding unit. For example, the transformation unit may include a data unit for an intra mode and a transformation unit for an inter mode.

The transformation unit in the coding unit may be recursively split into smaller sized regions in the similar manner as the coding unit according to the tree structure, thus, residual data of the coding unit may be divided according to the transformation unit having the tree structure according to a transformation depth.

A transformation depth indicating the number of splitting times to reach the transformation unit by splitting the height and width of the coding unit may also be set in the transformation unit. For example, in a current coding unit of 2Nx2N, a transformation depth may be 0 when the size of a transformation unit is 2Nx2N, may be 1 when the size of the transformation unit is NxN, and may be 2 when the size of the transformation unit is N/2xN/2. That is, with respect to the transformation unit, the transformation unit having the tree structure may be set according to the transformation depths.

Split information according to depths requires not only information about a depth but also requires information related to prediction and transformation. Accordingly, the coding unit determiner 120 may determine not only a depth generating a minimum encoding error but may also determine a partition mode in which a prediction unit is split to partitions, a prediction mode according to prediction units, and a size of a transformation unit for transformation.

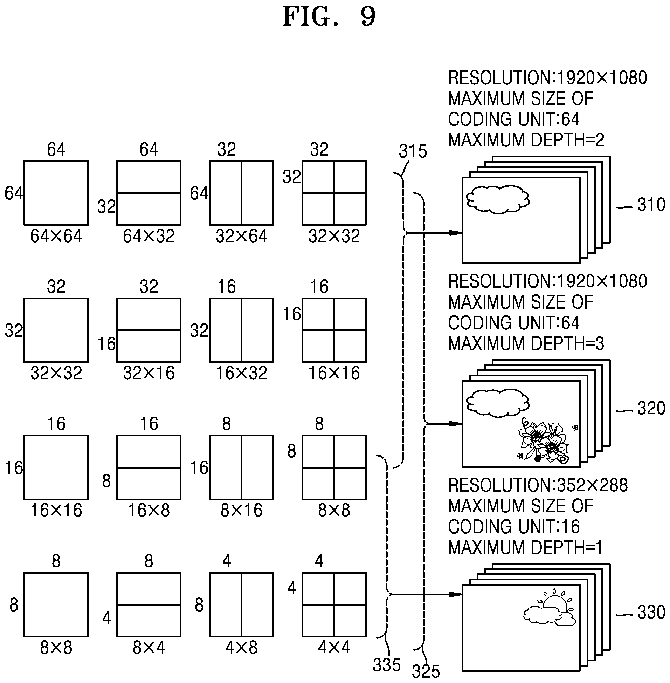

Coding units according to a tree structure in a maximum coding unit and methods of determining a prediction unit/partition, and a transformation unit, according to embodiments, will be described in detail later with reference to FIGS. 9 through 19.

The coding unit determiner 120 may measure an encoding error of deeper coding units according to depths by using Rate-Distortion Optimization based on Lagrangian multipliers.

The output unit 130 outputs, in bitstreams, the image data of the maximum coding unit, which is encoded based on the at least one depth determined by the coding unit determiner 120, and information according to depths.

The encoded image data may correspond to a result obtained by encoding residual data of an image.

The split information according to depths may include depth information, partition mode information of the prediction unit, prediction mode information, and the split information of the transformation unit.

Final depth information may be defined by using split information according to depths, which specifies whether encoding is performed on coding units of a lower depth instead of a current depth. If the current depth of the current coding unit is a depth, the current coding unit is encoded by using the coding unit of the current depth, and thus split information of the current depth may be defined not to split the current coding unit to a lower depth. On the contrary, if the current depth of the current coding unit is not the depth, the encoding has to be performed on the coding unit of the lower depth, and thus the split information of the current depth may be defined to split the current coding unit to the coding units of the lower depth.

If the current depth is not the depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one maximum coding unit, and at least one piece of split information has to be determined for a coding unit of a depth, at least one piece of split information may be determined for one maximum coding unit. Also, a depth of data of the maximum coding unit may vary according to locations since the data is hierarchically split according to depths, and thus a depth and split information may be set for the data.

Accordingly, the output unit 130 according to the embodiment may assign encoding information about a corresponding depth and an encoding mode to at least one of the coding unit, the prediction unit, and a minimum unit included in the maximum coding unit.

The minimum unit according to an embodiment is a square data unit obtained by splitting the smallest coding unit constituting the lowermost depth by 4. Alternatively, the minimum unit according to an embodiment may be a maximum square data unit that may be included in all of the coding units, prediction units, partition units, and transformation units included in the maximum coding unit.

For example, the encoding information output by the output unit 130 may be classified into encoding information according to deeper coding units, and encoding information according to prediction units. The encoding information according to the deeper coding units may include the information about the prediction mode and about the size of the partitions. The encoding information according to the prediction units may include information about an estimated direction during an inter mode, about a reference image index of the inter mode, about a motion vector, about a chroma component of an intra mode, and about an interpolation method during the intra mode.

Information about a maximum size of the coding unit defined according to pictures, slices, or GOPs, and information about a maximum depth may be inserted into a header of a bitstream, a sequence parameter set, or a picture parameter set.

Information about a maximum size of the transformation unit allowed with respect to a current video, and information about a minimum size of the transformation unit may also be output through a header of a bitstream, a sequence parameter set, or a picture parameter set. The output unit 130 may encode and output reference information, prediction information, and slice type information, which are related to prediction.

According to the simplest embodiment of the video encoding apparatus 100, the deeper coding unit may be a coding unit obtained by dividing a height or width of a coding unit of an upper depth, which is one layer above, by two. That is, when the size of the coding unit of the current depth is 2Nx2N, the size of the coding unit of the lower depth is NxN. Also, a current coding unit having a size of 2Nx2N may maximally include four lower-depth coding units each having a size of NxN.

Accordingly, the video encoding apparatus 100 may form the coding units having the tree structure by determining coding units having an optimum shape and an optimum size for each maximum coding unit, based on the size of the maximum coding unit and the maximum depth determined in consideration of characteristics of the current picture. Also, since encoding may be performed on each maximum coding unit by using any one of various prediction modes and transformations, an optimal encoding mode may be determined by taking into account characteristics of the coding unit of various image sizes.

Thus, if an image having a high resolution or a large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using the video encoding apparatus according to the embodiment, image compression efficiency may be increased since a coding unit is adjusted while considering characteristics of an image while increasing a maximum size of a coding unit while considering a size of the image.

FIG. 8 is a block diagram of a video decoding apparatus based on coding units according to a tree structure 200, according to various embodiments. The video decoding apparatus 200 in FIG. 8 may correspond to the video decoding apparatus 15 in FIG. 1B.

The video decoding apparatus involving video prediction based on coding units of the tree structure 200 according to the embodiment includes a receiver 210, an image data and encoding information extractor 220, and an image data decoder 230. The image data decoder 230 may correspond to the decoder 18 of FIG. 1B. Hereinafter, for convenience of description, the video decoding apparatus involving video prediction based on coding units of the tree structure 200 according to the embodiment is referred to as the 'video decoding apparatus 200'.

Definitions of various terms, such as a coding unit, a depth, a prediction unit, a transformation unit, and various types of split information for decoding operations of the video decoding apparatus 200 according to the embodiment are identical to those described with reference to FIG. 7 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each maximum coding unit, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts, from the parsed bitstream, a final depth and split information about the coding units having a tree structure according to each maximum coding unit. The extracted final depth and the extracted split information are output to the image data decoder 230. That is, the image data in a bit stream is split into the maximum coding unit so that the image data decoder 230 may decode the image data for each maximum coding unit.

A depth and split information according to each of the maximum coding units may be set for one or more pieces of depth information, and split information according to depths may include partition mode information of a corresponding coding unit, prediction mode information, and split information of a transformation unit. Also, as the depth information, the split information according to depths may be extracted.

The depth and the split information according to each of the maximum coding units extracted by the image data and encoding information extractor 220 are a depth and split information determined to generate a minimum encoding error when an encoder, such as the video encoding apparatus 100, repeatedly performs encoding for each deeper coding unit according to depths according to each maximum coding unit. Accordingly, the video decoding apparatus 200 may reconstruct an image by decoding data according to an encoding method that generates the minimum encoding error.

Since encoding information about the depth and the encoding mode may be assigned to a predetermined data unit from among a corresponding coding unit, a prediction unit, and a minimum unit, the image data and encoding information extractor 220 may extract the depth and the split information according to the predetermined data units. If a depth and split information of a corresponding maximum coding unit are recorded according to each of the predetermined data units, predetermined data units having the same depth and the split information may be inferred to be the data units included in the same maximum coding unit.

The image data decoder 230 reconstructs the current picture by decoding the image data in each maximum coding unit based on the depth and the split information according to each of the maximum coding units. That is, the image data decoder 230 may decode the encoded image data, based on a read partition mode, a prediction mode, and a transformation unit for each coding unit from among the coding units having the tree structure included in each maximum coding unit. A decoding process may include a prediction process including intra prediction and motion compensation, and an inverse transformation process.

The image data decoder 230 may perform intra prediction or motion compensation according to a partition and a prediction mode of each coding unit, based on the information about the partition type and the prediction mode of the prediction unit of the coding unit according to depths.

In addition, for inverse transformation for each maximum coding unit, the image data decoder 230 may read information about a transformation unit according to a tree structure for each coding unit so as to perform inverse transformation based on transformation units for each coding unit. Due to the inverse transformation, a pixel value of a spatial domain of the coding unit may be reconstructed.

The image data decoder 230 may determine a depth of a current maximum coding unit by using split information according to depths. If the split information indicates that image data is no longer split in the current depth, the current depth is a depth. Accordingly, the image data decoder 230 may decode the image data of the current maximum coding unit by using the information about the partition mode of the prediction unit, the prediction mode, and the size of the transformation unit for each coding unit corresponding to the current depth.

That is, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. As such, the current coding unit may be decoded by obtaining the information about the encoding mode for each coding unit.

The number of video decoding apparatuses 200 corresponding to the number of viewpoints may be included in order to reconstruct first layer images and second layer images by decoding the received first layer image stream and the received second layer image stream.

When the first layer image stream is received, the image data decoder 230 of the video decoding apparatus 200 may split samples of the first layer images, which are extracted from the first layer image stream by an extractor 220, into coding units according to a tree structure of a maximum coding unit. The image data decoder 230 may perform motion compensation, based on prediction units for the inter-image prediction, on each of the coding units according to the tree structure of the samples of the first layer images, and may reconstruct the first layer images.

When the second layer image stream is received, the image data decoder 230 of the video decoding apparatus 200 may split samples of the second layer images, which are extracted from the second layer image stream by the extractor 220, into coding units according to a tree structure of a maximum coding unit. The image data decoder 230 may perform motion compensation, based on prediction units for the inter-image prediction, on each of the coding units of the samples of the second layer images, and may reconstruct the second layer images.

The extractor 220 may obtain, from a bitstream, information related to a luminance error so as to compensate for a luminance difference between the first layer image and the second layer image. However, whether to perform luminance compensation may be determined according to an encoding mode of a coding unit. For example, the luminance compensation may be performed only on a prediction unit having a size of 2Nx2N.

Thus, the video decoding apparatus 200 may obtain information about at least one coding unit that generates the minimum encoding error when encoding is recursively performed for each maximum coding unit, and may use the information to decode the current picture. That is, the coding units having the tree structure determined to be the optimum coding units in each maximum coding unit may be decoded.

Accordingly, even if an image has high resolution or has an excessively large data amount, the image may be efficiently decoded and reconstructed by using a size of a coding unit and an encoding mode, which are adaptively determined according to characteristics of the image, by using optimal split information received from an encoding terminal.

FIG. 9 illustrates a concept of coding units, according to various embodiments.

A size of a coding unit may be expressed by width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

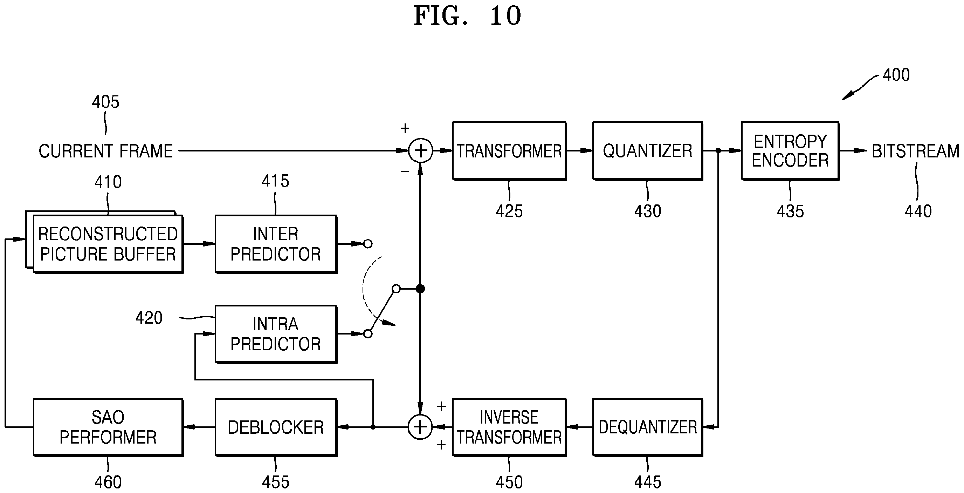

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 10 denotes the total number of splits from a maximum coding unit to a smallest coding unit.

If a resolution is high or a data amount is large, it is preferable that a maximum size of a coding unit is large so as to not only increase encoding efficiency but also to accurately reflect characteristics of an image. Accordingly, the maximum size of the coding unit of the video data 310 and 320 having a higher resolution than the video data 330 may be selected to 64.

Since the maximum depth of the video data 310 is 2, coding units 315 of the video data 310 may include a maximum coding unit having a long axis size of 64, and coding units having long axis sizes of 32 and 16 since depths are deepened to two layers by splitting the maximum coding unit twice. On the other hand, since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, an expression capability with respect to detailed information may be improved.

FIG. 10 illustrates a block diagram of an image encoder 400 based on coding units, according to various embodiments.

The image encoder 400 according to an embodiment performs operations of a picture encoder 120 of the video encoding apparatus 100 so as to encode image data. That is, an intra predictor 420 performs intra prediction on coding units in an intra mode, from among a current image 405, and an inter predictor 415 performs inter prediction on coding units in an inter mode by using the current image 405 and a reference image obtained from a reconstructed picture buffer 410 according to prediction units. The current image 405 may be split into maximum coding units and then the maximum coding units may be sequentially encoded. In this regard, the maximum coding units that are to be split into coding units having a tree structure may be encoded.

Residue data is generated by removing prediction data regarding a coding unit of each mode which is output from the intra predictor 420 or the inter predictor 415 from data regarding an encoded coding unit of the current image 405, and the residue data is output as a quantized transformation coefficient according to transformation units through a transformer 425 and a quantizer 430. The quantized transformation coefficient is reconstructed as the residue data in a spatial domain through an inverse-quantizer 445 and an inverse-transformer 450. The reconstructed residual image data in the spatial domain is added to prediction data for the coding unit of each mode which is output from the intra predictor 420 or the inter predictor 415 and thus is reconstructed as data in a spatial domain for a coding unit of the current image 405. The reconstructed data in the spatial domain is generated as a reconstructed image through a deblocking unit 455 and an SAO performer 460. The reconstructed image is stored in the reconstructed picture buffer 410. The reconstructed images stored in the reconstructed picture buffer 410 may be used as reference images for inter predicting another image. The transformation coefficient quantized by the transformer 425 and the quantizer 430 may be output as a bitstream 440 through an entropy encoder 435.

In order for the image encoder 400 to be applied in the video encoding apparatus 100, all elements of the image encoder 400, i.e., the inter predictor 415, the intra predictor 420, the transformer 425, the quantizer 430, the entropy encoder 435, the inverse-quantizer 445, the inverse-transformer 450, the deblocking unit 455, and the SAO performer 460, may perform operations based on each coding unit among coding units having a tree structure according to each maximum coding unit.

In particular, the intra predictor 420 and the inter predictor 415 may determine a partition mode and a prediction mode of each coding unit from among the coding units having a tree structure, by taking into account the maximum size and the maximum depth of a current maximum coding unit, and the transformer 425 may determine whether to split a transformation unit according to a quad tree in each coding unit from among the coding units having a tree structure.

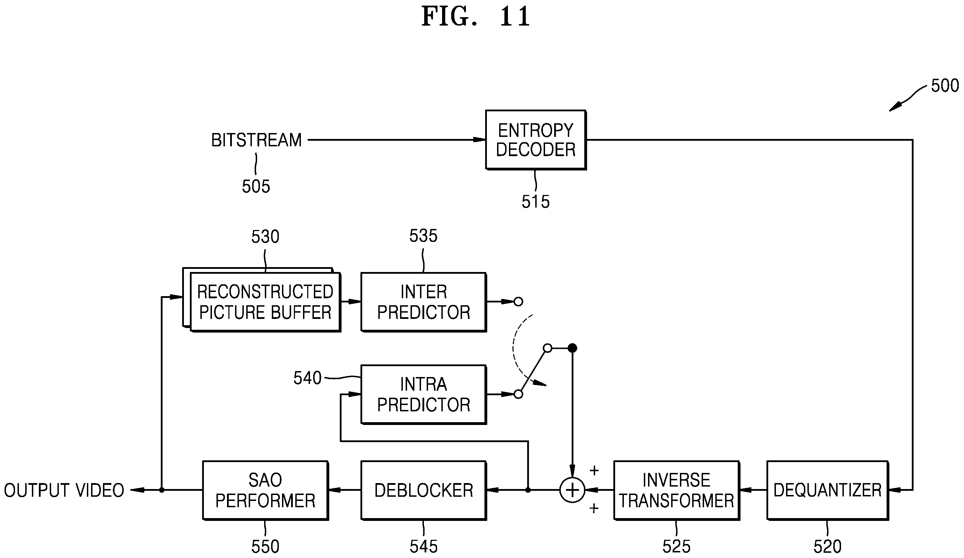

FIG. 11 illustrates a block diagram of an image decoder 500 based on coding units, according to various embodiments.

An entropy decoder 515 parses, from a bitstream 505, encoded image data to be decoded and encoding information required for decoding. The encoded image data corresponds to a quantized transformation coefficient, and an inverse-quantizer 520 and an inverse-transformer 525 reconstruct residue data from the quantized transformation coefficient.

An intra predictor 540 performs intra prediction on a coding unit in an intra mode according to prediction units. An inter predictor 535 performs inter prediction by using a reference image with respect to a coding unit in an inter mode from among a current image, wherein the reference image is obtained by a reconstructed picture buffer 530 according to prediction units.

Prediction data and residue data regarding coding units of each mode, which passed through the intra predictor 540 and the inter predictor 535, are summed, so that data in a spatial domain regarding coding units of the current image 405 may be reconstructed, and the reconstructed data in the spatial domain may be output as a reconstructed image 560 through a deblocking unit 545 and an SAO performer 550. Reconstructed images stored in the reconstructed picture buffer 530 may be output as reference images.

In order for a picture decoder 230 of the video decoding apparatus 200 to decode the image data, operations after the entropy decoder 515 of the image decoder 500 according to an embodiment may be performed.

In order for the image decoder 500 to be applied in the video decoding apparatus 200 according to an embodiment, all elements of the image decoder 500, i.e., the entropy decoder 515, the inverse-quantizer 520, the inverse-transformer 525, the intra predictor 540, the inter predictor 535, the deblocking unit 545, and the SAO performer 550 may perform operations based on coding units having a tree structure for each maximum coding unit.

In particular, the intra predictor 540 and the inter predictor 535 may determine a partition mode and a prediction mode of each coding unit from among the coding units according to a tree structure, and the inverse-transformer 525 may determine whether or not to split a transformation unit according to a quad tree in each coding unit.

The encoding operation of FIG. 10 and the decoding operation of FIG. 11 are described as a video stream encoding operation and a video stream decoding operation, respectively, in a single layer. Accordingly, the encoder 12 may be included according to layers when the image encoding apparatus 10 of FIG. 1A encodes a videostream of at least two layers.

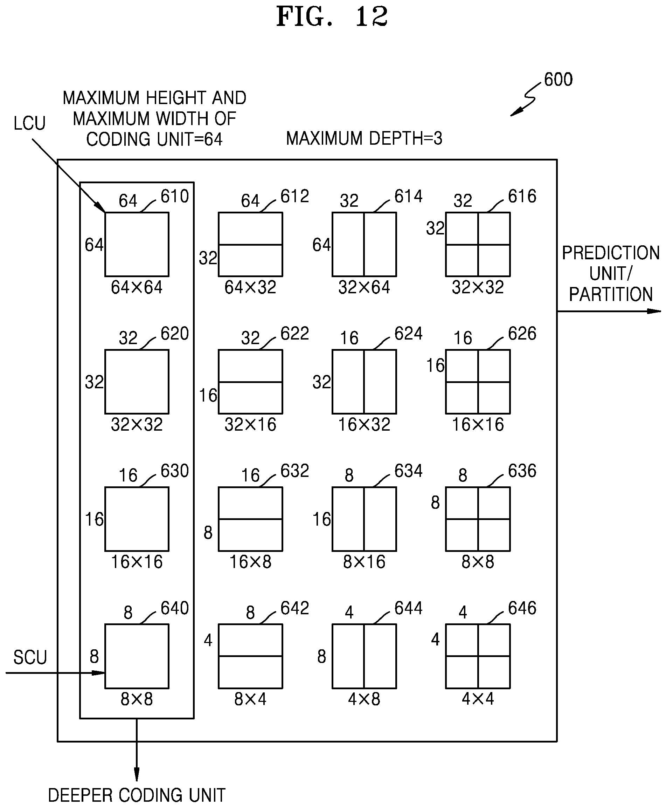

FIG. 12 illustrates deeper coding units according to depths, and partitions, according to various embodiments.

The video encoding apparatus 100 according to an embodiment and the video decoding apparatus 200 according to an embodiment use hierarchical coding units so as to consider characteristics of an image. A maximum height, a maximum width, and a maximum depth of coding units may be adaptively determined according to the characteristics of the image, or may be variously set according to user requirements. Sizes of deeper coding units according to depths may be determined according to the predetermined maximum size of the coding unit.

In a hierarchical structure of coding units 600 according to an embodiment, the maximum height and the maximum width of the coding units are each 64, and the maximum depth is 3. In this case, the maximum depth represents a total number of times the coding unit is split from the maximum coding unit to the smallest coding unit. Since a depth deepens along a vertical axis of the hierarchical structure of coding units 600, a height and a width of the deeper coding unit are each split. Also, a prediction unit and partitions, which are bases for prediction encoding of each deeper coding unit, are shown along a horizontal axis of the hierarchical structure of coding units 600.

That is, a coding unit 610 is a maximum coding unit in the hierarchical structure of coding units 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3 are present. The coding unit 640 having the size of 8x8 and the depth of 3 is a smallest coding unit.

The prediction unit and the partitions of a coding unit are arranged along the horizontal axis according to each depth. That is, if the coding unit 610 having a size of 64x64 and a depth of 0 is a prediction unit, the prediction unit may be split into partitions included in the coding unit 610 having the size of 64x64, i.e. a partition 610 having a size of 64x64, partitions 612 having the size of 64x32, partitions 614 having the size of 32x64, or partitions 616 having the size of 32x32.

Equally, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Equally, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Equally, a prediction unit of the coding unit 640 having the size of 8x8 and the depth of 3 may be split into partitions included in the coding unit 640, i.e. a partition 640 having a size of 8x8 included in the coding unit 640, partitions 642 having a size of 8x4, partitions 644 having a size of 4x8, and partitions 646 having a size of 4x4.

In order to determine a depth of the maximum coding unit 610, the coding unit determiner 120 of the video encoding apparatus 100 has to perform encoding on coding units respectively corresponding to depths included in the maximum coding unit 610.

The number of deeper coding units according to depths including data in the same range and the same size increases as the depth deepens. For example, four coding units corresponding to a depth of 2 are required to cover data that is included in one coding unit corresponding to a depth of 1. Accordingly, in order to compare results of encoding the same data according to depths, the data has to be encoded by using each of the coding unit corresponding to the depth of 1 and four coding units corresponding to the depth of 2.

In order to perform encoding according to each of the depths, a minimum encoding error that is a representative encoding error of a corresponding depth may be selected by performing encoding on each of prediction units of the coding units according to depths, along the horizontal axis of the hierarchical structure of coding units 600. Also, the minimum encoding error may be searched for by comparing representative encoding errors according to depths, by performing encoding for each depth as the depth deepens along the vertical axis of the hierarchical structure of coding units 600. A depth and a partition generating the minimum encoding error in the maximum coding unit 610 may be selected as a depth and a partition mode of the maximum coding unit 610.

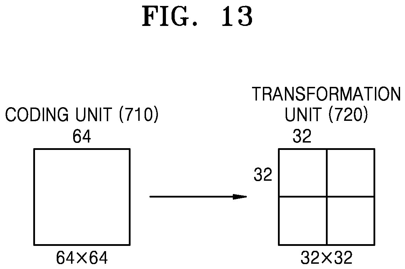

FIG. 13 illustrates a relationship between a coding unit and transformation units, according to various embodiments.

The video encoding apparatus 100 according to an embodiment or the video decoding apparatus 200 according to an embodiment encodes or decodes an image according to coding units having sizes smaller than or equal to a maximum coding unit for each maximum coding unit. Sizes of transformation units for transformation during an encoding process may be selected based on data units that are not larger than a corresponding coding unit.

For example, in the video encoding apparatus 100 or the video decoding apparatus 200, when a size of the coding unit 710 is 64x64, transformation may be performed by using the transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error with respect to an original image may be selected.

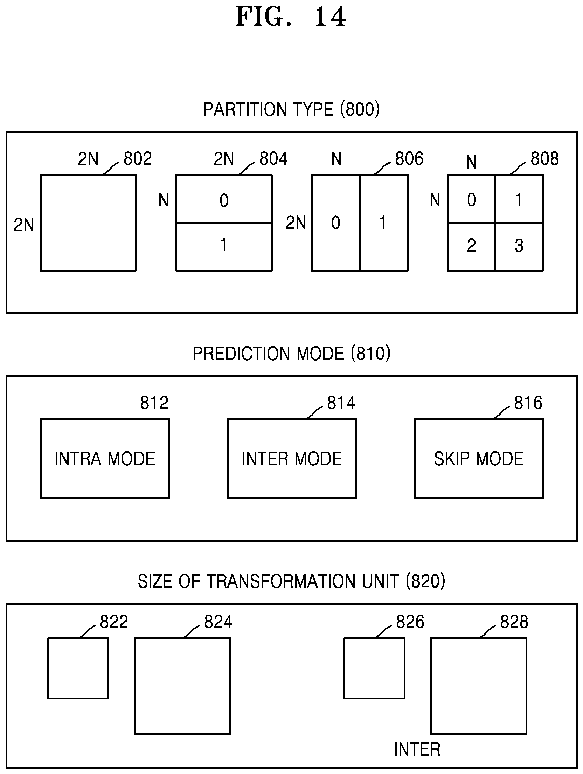

FIG. 14 illustrates a plurality of pieces of encoding information, according to various embodiments.

The output unit 130 of the video encoding apparatus 100 according to an embodiment may encode and transmit, as split information, partition mode information 800, prediction mode information 810, and transformation unit size information 820 for each coding unit corresponding to a depth.

The partition mode information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. In this case, the partition mode information 800 about a current coding unit is set to indicate one of the partition 802 having a size of 2Nx2N, the partition 804 having a size of 2NxN, the partition 806 having a size of Nx2N, and the partition 808 having a size of NxN.

The prediction mode information 810 indicates a prediction mode of each partition. For example, the prediction mode information 810 may indicate a mode of prediction encoding performed on a partition indicated by the partition mode information 800, i.e., an intra mode 812, an inter mode 814, or a skip mode 816.

The transformation unit size information 820 represents a transformation unit to be based on when transformation is performed on a current coding unit. For example, the transformation unit may be one of a first intra transformation unit 822, a second intra transformation unit 824, a first inter transformation unit 826, and a second inter transformation unit 828.

The image data and encoding information extractor 220 of the video decoding apparatus 200 may extract and use the partition mode information 800, the prediction mode information 810, and the transformation unit size information 820 for decoding, according to each deeper coding unit.

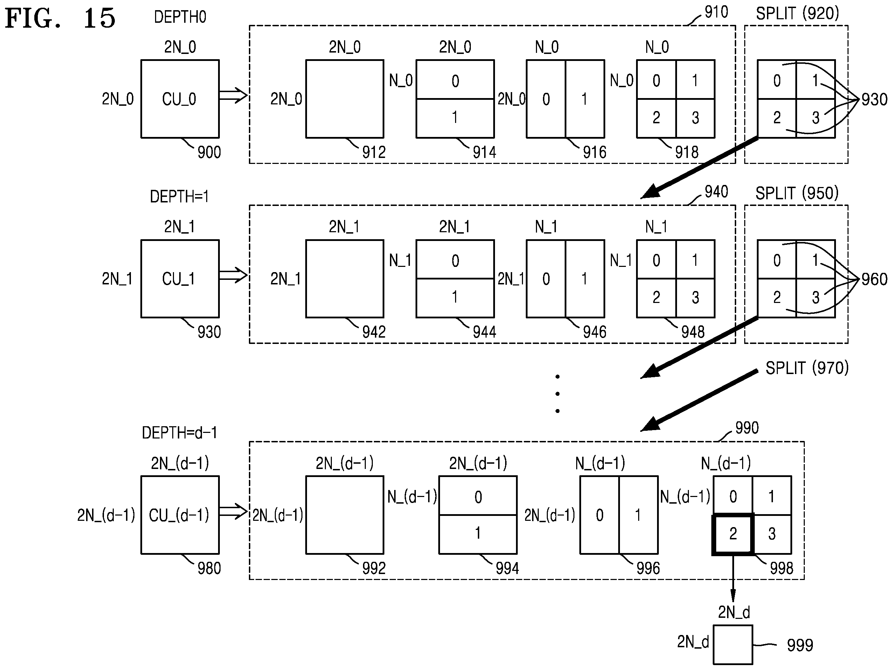

FIG. 15 illustrates deeper coding units according to depths, according to various embodiments.

Split information may be used to represent a change in a depth. The spilt information specifies whether a coding unit of a current depth is split into coding units of a lower depth.

A prediction unit 910 for prediction encoding a coding unit 900 having a depth of 0 and a size of 2N_0x2N_0 may include partitions of a partition mode 912 having a size of 2N_0x2N_0, a partition mode 914 having a size of 2N_0xN_0, a partition mode 916 having a size of N_0x2N_0, and a partition mode 918 having a size of N_0xN_0. Only the partition modes 912, 914, 916, and 918 which are obtained by symmetrically splitting the prediction unit are illustrated, but as described above, a partition mode is not limited thereto and may include asymmetrical partitions, partitions having a predetermined shape, and partitions having a geometrical shape.

According to each partition mode, prediction encoding has to be repeatedly performed on one partition having a size of 2N_0x2N_0, two partitions having a size of 2N_0xN_0, two partitions having a size of N_0x2N_0, and four partitions having a size of N_0xN_0. The prediction encoding in an intra mode and an inter mode may be performed on the partitions having the sizes of 2N_0x2N_0, N_0x2N_0, 2N_0xN_0, and N_0xN_0. The prediction encoding in a skip mode may be performed only on the partition having the size of 2N_0x2N_0.

If an encoding error is smallest in one of the partition modes 912, 914, and 916 having the sizes of 2N_0x2N_0, 2N_0xN_0 and N_0x2N_0, the prediction unit 910 may not be split into a lower depth.

If the encoding error is the smallest in the partition mode 918 having the size of N_0xN_0, a depth is changed from 0 to 1 and split is performed (operation 920), and encoding may be repeatedly performed on coding units 930 of a partition mode having a depth of 2 and a size of N_0xN_0 so as to search for a minimum encoding error.

A prediction unit 940 for prediction encoding the coding unit 930 having a depth of 1 and a size of 2N_1x2N_1 (=N_0xN_0) may include a partition mode 942 having a size of 2N_1x2N_1, a partition mode 944 having a size of 2N_1xN_1, a partition mode 946 having a size of N_1x2N_1, and a partition mode 948 having a size of N_1xN_1.

If an encoding error is the smallest in the partition mode 948 having the size of N_1xN_1, a depth is changed from 1 to 2 and split is performed (in operation 950), and encoding is repeatedly performed on coding units 960 having a depth of 2 and a size of N_2xN_2 so as to search for a minimum encoding error.

When a maximum depth is d, deeper coding units according to depths may be set until when a depth corresponds to d-1, and split information may be set until when a depth corresponds to d-2. That is, when encoding is performed up to when the depth is d-1 after a coding unit corresponding to a depth of d-2 is split (in operation 970), a prediction unit 990 for prediction encoding a coding unit 980 having a depth of d-1 and a size of 2N_(d-1)x2N_(d-1) may include partitions of a partition mode 992 having a size of 2N_(d-1)x2N_(d-1), a partition mode 994 having a size of 2N_(d-1)xN_(d-1), a partition mode 996 having a size of N_(d-1)x2N_(d-1), and a partition mode 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition modes so as to search for a partition mode generating a minimum encoding error.

Even when the partition type 998 having the size of N_(d-1)xN_(d-1) has the minimum encoding error, since a maximum depth is d, a coding unit CU_(d-1) having a depth of d-1 is no longer split into a lower depth, and a depth for the coding units constituting a current maximum coding unit 900 is determined to be d-1 and a partition mode of the current maximum coding unit 900 may be determined to be N_(d-1)xN_(d-1). Also, since the maximum depth is d, split information for a coding unit 952 having a depth of d-1 is not set.

A data unit 999 may be a 'minimum unit' for the current maximum coding unit. A minimum unit according to the embodiment may be a square data unit obtained by splitting a smallest coding unit having a lowermost depth by 4. By performing the encoding repeatedly, the video encoding apparatus 100 according to the embodiment may select a depth having the least encoding error by comparing encoding errors according to depths of the coding unit 900 to determine a depth, and set a corresponding partition type and a prediction mode as an encoding mode of the depth.

As such, the minimum encoding errors according to depths are compared in all of the depths of 0, 1, ..., d-1, d, and a depth having a minimum encoding error may be determined as a depth. The depth, the partition mode of the prediction unit, and the prediction mode may be encoded and transmitted as split information. Also, since a coding unit has to be split from a depth of 0 to a depth, only split information of the depth is set to '0', and split information of depths excluding the depth is set to '1'.

The image data and encoding information extractor 220 of the video decoding apparatus 200 according to the embodiment may extract and use a depth and prediction unit information about the coding unit 900 so as to decode the coding unit 912. The video decoding apparatus 200 according to the embodiment may determine a depth, in which split information is '0', as a depth by using split information according to depths, and may use, for decoding, split information about the corresponding depth.

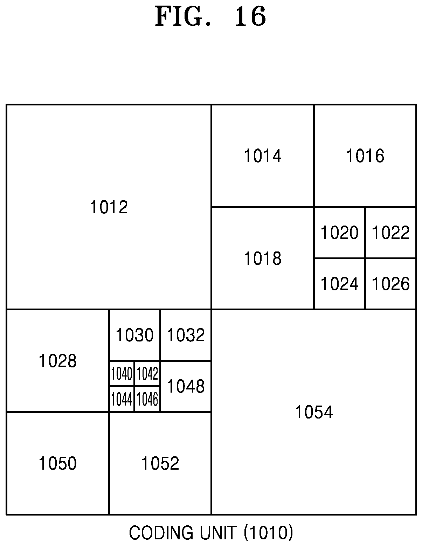

FIGS. 16, 17, and 18 illustrate a relationship between coding units, prediction units, and transformation units, according to various embodiments.

Coding units 1010 are deeper coding units according to depths determined by the video encoding apparatus 100, in a maximum coding unit. Prediction units 1060 are partitions of prediction units of each of the coding units 1010 according to depths, and transformation units 1070 are transformation units of each of the coding units according to depths.

When a depth of a maximum coding unit is 0 in the deeper coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

Some partitions 1014, 1016, 1022, 1032, 1048, 1050, 1052, and 1054 from among the prediction units 1060 are obtained by splitting the coding unit. That is, partitions 1014, 1022, 1050, and 1054 are a partition mode having a size of 2NxN, partitions 1016, 1048, and 1052 are a partition mode having a size of Nx2N, and a partition 1032 is a partition mode having a size of NxN. Prediction units and partitions of the deeper coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, 1052, and 1054 in the transformation units 1760 are data units different from those in the Prediction units 1060 in terms of sizes and shapes. That is, the video encoding apparatus 100 and the video decoding apparatus 200 according to the embodiments may perform intra prediction / motion estimation / motion compensation / and transformation/inverse transformation on an individual data unit in the same coding unit.

Accordingly, encoding is recursively performed on each of coding units having a hierarchical structure in each region of a maximum coding unit so as to determine an optimum coding unit, and thus coding units according to a recursive tree structure may be obtained. Encoding information may include split information about a coding unit, partition mode information, prediction mode information, and transformation unit size information. Table 1 below shows the encoding information that may be set by the video encoding apparatus 100 and the video decoding apparatus 200 according to the embodiments.

[Table 1]

| Split Information 0 (Encoding on Coding Unit having Size of 2Nx2N and Current Depth of d) | | | | | Split Information 1 |
|---|---|---|---|---|---|
| Prediction Mode | Partition Mode | | Size of Transformation Unit | | Repeatedly Encode Coding Units having Lower Depth of d+1 |
| Intra<br><br>Inter<br><br>Skip (Only 2Nx2N) | Symmetrical Partition Mode | Asymmetrical Partition Mode | Split Information 0 of Transformation Unit | Split Information 1 of Transformation Unit | |
| | 2Nx2N<br>2NxN<br>Nx2N<br>NxN | 2NxnU<br>2NxnD<br>nLx2N<br>nRx2N | 2Nx2N | NxN (Symmetrical Partition Mode)<br><br>N/2xN/2 (Asymmetrical Partition Mode) | |

The output unit 130 of the video encoding apparatus 100 according to the embodiment may output the encoding information about the coding units having a tree structure, and the image data and encoding information extractor 220 of the video decoding apparatus 200 according to the embodiment may extract the encoding information about the coding units having a tree structure from a received bitstream.

Split information specifies whether a current coding unit is split into coding units of a lower depth. If split information of a current depth d is 0, a depth, in which a current coding unit is no longer split into a lower depth, is a depth, and thus partition mode information, prediction mode information, and transformation unit size information may be defined for the depth. If the current coding unit has to be further split according to the split information, encoding has to be independently performed on each of four split coding units of a lower depth.

A prediction mode may be one of an intra mode, an inter mode, and a skip mode. The intra mode and the inter mode may be defined in all partition modes, and the skip mode is defined only in a partition mode having a size of 2Nx2N.

The partition mode information may indicate symmetrical partition modes having sizes of 2Nx2N, 2NxN, Nx2N, and NxN, which are obtained by symmetrically splitting a height or a width of a prediction unit, and asymmetrical partition modes having sizes of 2NxnU, 2NxnD, nLx2N, and nRx2N, which are obtained by asymmetrically splitting the height or width of the prediction unit. The asymmetrical partition modes having the sizes of 2NxnU and 2NxnD may be respectively obtained by splitting the height of the prediction unit in 1:3 and 3:1, and the asymmetrical partition modes having the sizes of nLx2N and nRx2N may be respectively obtained by splitting the width of the prediction unit in 1:3 and 3:1.

The size of the transformation unit may be set to be two types in the intra mode and two types in the inter mode. That is, if split information of the transformation unit is 0, the size of the transformation unit may be 2Nx2N, which is the size of the current coding unit. If split information of the transformation unit is 1, the transformation units may be obtained by splitting the current coding unit. Also, if a partition mode of the current coding unit having the size of 2Nx2N is a symmetrical partition mode, a size of a transformation unit may be NxN, and if the partition mode of the current coding unit is an asymmetrical partition mode, the size of the transformation unit may be N/2xN/2.

The encoding information about coding units having a tree structure according to the embodiment may be assigned to at least one of a coding unit corresponding to a depth, a prediction unit, and a minimum unit. The coding unit corresponding to the depth may include at least one of a prediction unit and a minimum unit containing the same encoding information.

Accordingly, it is determined whether adjacent data units are included in the same coding unit corresponding to the depth by comparing encoding information of the adjacent data units. Also, a corresponding coding unit corresponding to a depth is determined by using encoding information of a data unit, and thus a distribution of depths in a maximum coding unit may be inferred.

Accordingly, if a current coding unit is predicted based on encoding information of adjacent data units, encoding information of data units in deeper coding units adjacent to the current coding unit may be directly referred to and used.

In another embodiment, if a current coding unit is predicted based on encoding information of adjacent data units, data units adjacent to the current coding unit may be searched by using encoded information of the data units, and the searched adjacent coding units may be referred for predicting the current coding unit.

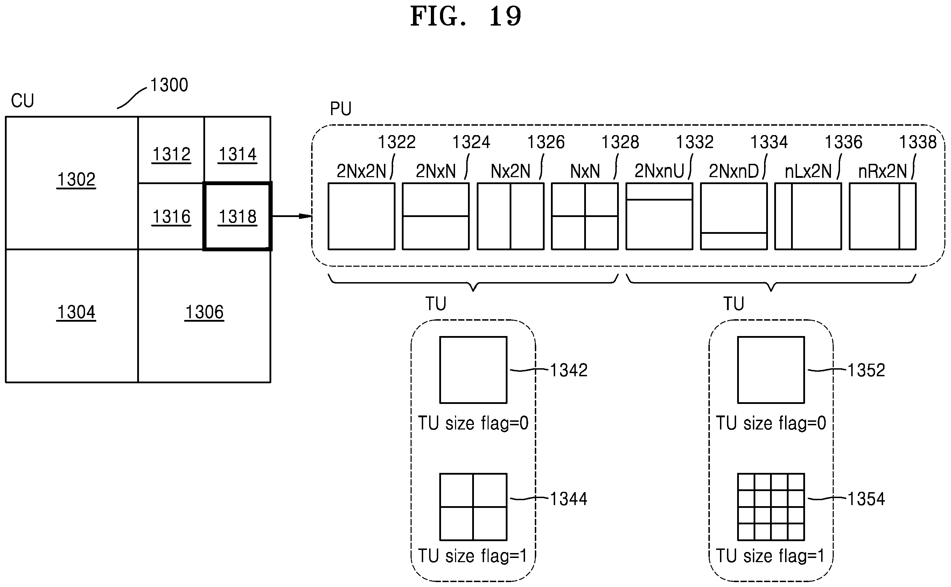

FIG. 19 illustrates a relationship between a coding unit, a prediction unit, and a transformation unit, according to encoding mode information of Table 1.

A maximum coding unit 1300 includes coding units 1302, 1304, 1306, 1312, 1314, 1316, and 1318 of depths. Here, since the coding unit 1318 is a coding unit of a depth, split information may be set to 0. Partition mode information of the coding unit 1318 having a size of 2Nx2N may be set to be one of partition modes including 2Nx2N 1322, 2NxN 1324, Nx2N 1326, NxN 1328, 2NxnU 1332, 2NxnD 1334, nLx2N 1336, and nRx2N 1338.

Transformation unit split information (TU size flag) is a type of a transformation index, and a size of a transformation unit corresponding to the transformation index may be changed according to a prediction unit type or partition mode of the coding unit.

For example, when the partition mode information is set to be one of symmetrical partition modes 2Nx2N 1322, 2NxN 1324, Nx2N 1326, and NxN 1328, if the transformation unit split information is 0, a transformation unit 1342 having a size of 2Nx2N is set, and if the transformation unit split information is 1, a transformation unit 1344 having a size of NxN may be set.

When the partition mode information is set to be one of asymmetrical partition modes 2NxnU 1332, 2NxnD 1334, nLx2N 1336, and nRx2N 1338, if the transformation unit split information (TU size flag) is 0, a transformation unit 1352 having a size of 2Nx2N may be set, and if the transformation unit split information is 1, a transformation unit 1354 having a size of N/2xN/2 may be set.

The transformation unit split information (TU size flag) described above with reference to FIG. 19 is a flag having a value of 0 or 1, but the transformation unit split information according to an embodiment is not limited to a flag having 1 bit, and the transformation unit may be hierarchically split while the transformation unit split information increases in a manner of 0, 1, 2, 3.. etc., according to setting. The transformation unit split information may be an example of the transformation index.

In this case, the size of a transformation unit that has been actually used may be expressed by using the transformation unit split information according to the embodiment, together with a maximum size of the transformation unit and a minimum size of the transformation unit. The video encoding apparatus 100 according to the embodiment may encode maximum transformation unit size information, minimum transformation unit size information, and maximum transformation unit split information. The result of encoding the maximum transformation unit size information, the minimum transformation unit size information, and the maximum transformation unit split information may be inserted into an SPS. The video decoding apparatus 200 according to the embodiment may decode video by using the maximum transformation unit size information, the minimum transformation unit size information, and the maximum transformation unit split information.

For example, (a) if the size of a current coding unit is 64x64 and a maximum transformation unit size is 32x32, (a-1) then the size of a transformation unit may be 32x32 when a TU size flag is 0, (a-2) may be 16x16 when the TU size flag is 1, and (a-3) may be 8x8 when the TU size flag is 2.

As another example, (b) if the size of the current coding unit is 32x32 and a minimum transformation unit size is 32x32, (b-1) then the size of the transformation unit may be 32x32 when the TU size flag is 0. Here, the TU size flag cannot be set to a value other than 0, since the size of the transformation unit cannot be smaller than 32x32.

As another example, (c) if the size of the current coding unit is 64x64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit may be defined by Equation (1):

$$\text{CurrMinTuSize}$$
$$= \max \left(\text{MinTransformSize}, \text{RootTuSize}/(2*\text{MaxTransformSizeIndex})\right) \dots (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. That is, in Equation (1), 'RootTuSize/(2^MaxTransformSizeIndex)' denotes a transformation unit size when the transformation unit size 'RootTuSize', when the TU size flag is 0, is split by the number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to an embodiment, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$\text{RootTuSize} = \min(\text{MaxTransformSize}, \text{PUSize}) \ldots\ldots\ldots (2)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$\text{RootTuSize} = \min(\text{MaxTransformSize}, \text{PartitionSize}) \ldots\ldots\ldots(3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an embodiment, and a factor for determining the current maximum transformation unit size is not limited thereto.

According to the video encoding method based on coding units of a tree structure described above with reference to FIGS. 7 through 19, image data of a spatial domain is encoded in each of the coding units of the tree structure, and the image data of the spatial domain is reconstructed in a manner that decoding is performed on each maximum coding unit according to the video decoding method based on the coding units of the tree structure, so that a video that is formed of pictures and picture sequences may be reconstructed. The reconstructed video may be reproduced by a reproducing apparatus, may be stored in a storage medium, or may be transmitted via a network.

The one or more embodiments may be written as computer programs and may be implemented in general-use digital computers that execute the programs by using a non-transitory computer-readable recording medium. Examples of the non-transitory computer-readable recording medium include magnetic storage media (e.g., ROM, floppy disks, hard disks, etc.), optical recording media (e.g., CD-ROMs, or DVDs), etc.

For convenience of description, the image encoding methods and/or the video encoding method, which are described with reference to FIGS. 1A through 19, will be collectively referred to as 'the video encoding method'. Also, the image decoding methods and/or the video decoding method, which are described with reference to FIGS. 1A through 19, will be collectively referred to as 'the video decoding method'.

Also, a video encoding apparatus including the image encoding apparatus 40, the video encoding apparatus 100, or the image encoder 400 which are described with reference to FIGS. 1A through 19 will be collectively referred to as a 'video encoding apparatus'. Also, a video decoding apparatus including the image decoding apparatus 30, the video decoding apparatus 200, or the image decoder 500 which are described with reference to FIGS. 1A through 20 will be collectively referred to as a 'video decoding apparatus'.

A non-transitory computer-readable recording medium such as a disc 26000 that stores the programs according to an embodiment will now be described in detail.

FIG. 20 illustrates a physical structure of the disc 26000 in which a program is stored, according to various embodiments. The disc 26000, as a storage medium, may be a hard drive, a compact disc-read only memory (CD-ROM) disc, a Blu-ray disc, or a digital versatile disc (DVD). The disc 26000 includes a plurality of concentric tracks Tr that are each divided into a specific number of sectors Se in a circumferential direction of the disc 26000. In a specific region of the disc 26000, a program that executes the quantized parameter determining method, the video encoding method, and the video decoding method described above may be assigned and stored.

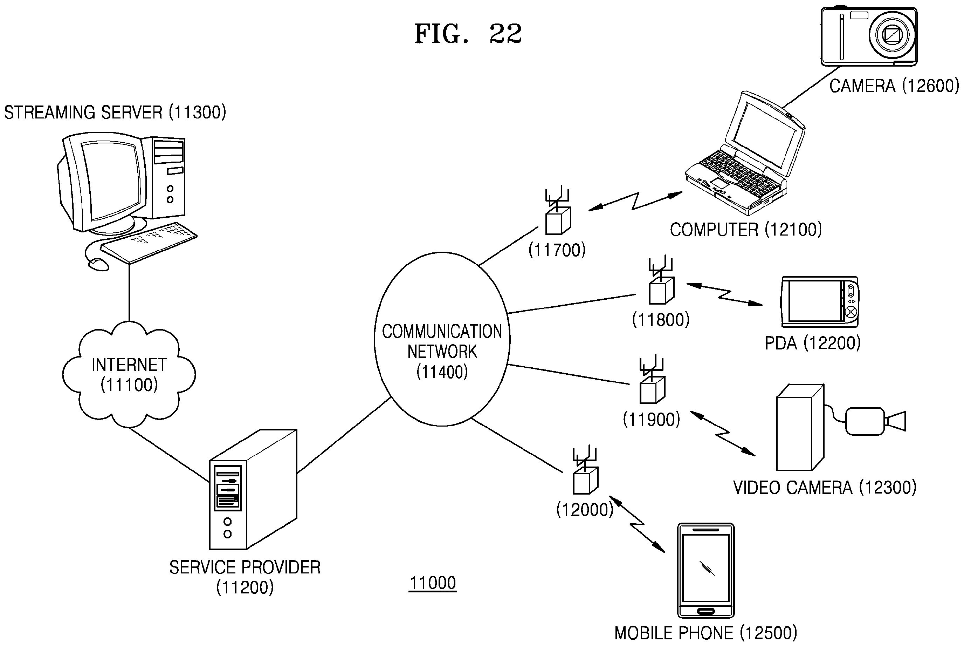

A computer system embodied using a storage medium that stores a program for executing the video encoding method and the video decoding method as described above will now be described with reference to FIG. 22.

FIG. 21 illustrates a disc drive 26800 for recording and reading a program by using the disc 26000. A computer system 26700 may store a program that executes at least one of the video encoding method and the video decoding method according to an embodiment, in the disc 26000 via the disc drive 26800. In order to run the program stored in the disc 26000 in the computer system 26700, the program may be read from the disc 26000 and may be transmitted to the computer system 26700 by using the disc drive 26800.

The program that executes at least one of the video encoding method and the video decoding method according to an embodiment may be stored not only in the disc 26000 illustrated in FIGS. 20 and 21 but may also be stored in a memory card, a ROM cassette, or a solid state drive (SSD).

A system to which the video encoding method and the video decoding method according to the embodiments described above are applied will be described below.

FIG. 22 illustrates an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

However, the content supply system 11000 is not limited to as illustrated in FIG. 22, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded by the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded using the camera 12600 or the computer 12100. Software that performs encoding and decoding video may be stored in a non-transitory computer-readable recording medium, e.g., a CD-ROM disc, a floppy disc, a hard disc drive, an SSD, or a memory card, which may be accessed by the computer 12100.

If video data is captured by a camera built in the mobile phone 12500, the video data may be received from the mobile phone 12500.

The video data may be encoded by a large scale integrated circuit (LSI) system installed in the video camera 12300, the mobile phone 12500, or the camera 12600.

In the content supply system 11000 according to an embodiment, content data, e.g., content recorded during a concert, which has been recorded by a user using the video camera 12300, the camera 12600, the mobile phone 12500, or another imaging device is encoded and is transmitted to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and decode and reproduce the encoded content data in real time, thereby enabling personal broadcasting.

Encoding and decoding operations of the plurality of independent devices included in the content supply system 11000 may be similar to those of the video encoding apparatus and the video decoding apparatus according to an embodiment.

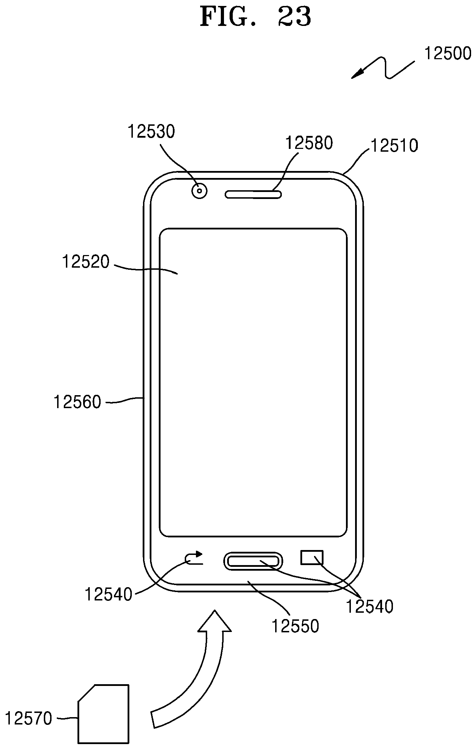

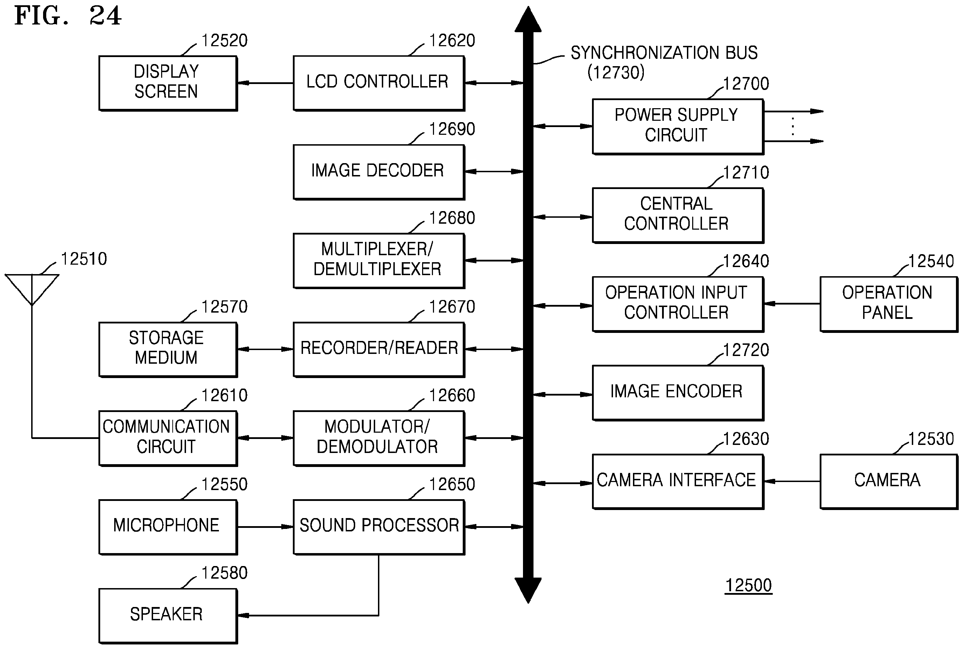

With reference to FIGS. 23 and 24, the mobile phone 12500 included in the content supply system 11000 according to an embodiment will now be described in detail.

FIG. 23 illustrates an external structure of the mobile phone 12500 to which the video encoding method and the video decoding method are applied, according to various embodiments. The mobile phone 12500 may be a smart phone, the functions of which are not limited and a large number of the functions of which may be changed or expanded.

The mobile phone 12500 includes an internal antenna 12510 via which a radiofrequency (RF) signal may be exchanged with the wireless base station 12000, and includes a display screen 12520 for displaying images captured by a camera 12530 or images that are received via the antenna 12510 and decoded, e.g., a liquid crystal display (LCD) or an organic light-emitting diode (OLED) screen. The mobile phone 12500 includes an operation panel 12540 including a control button and a touch panel. If the display screen 12520 is a touch screen, the operation panel 12540 further includes a touch sensing panel of the display screen 12520. The mobile phone 12500 includes a speaker 12580 for outputting voice and sound or another type of a sound output unit, and a microphone 12550 for inputting voice and sound or another type of a sound input unit. The mobile phone 12500 further includes the camera 12530, such as a charge-coupled device (CCD) camera, to capture video and still images. The mobile phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 24 illustrates an internal structure of the mobile phone 12500. In order to systemically control parts of the mobile phone 12500 including the display screen 12520 and the operation panel 12540, a power supply circuit 12700, an operation input controller 12640, an image encoder 12720, a camera interface 12630, an LCD controller 12620, an image decoder 12690, a multiplexer/demultiplexer 12680, a recording/reading unit 12670, a modulation/demodulation unit 12660, and a sound processor 12650 are connected to a central controller 12710 via a synchronization bus 12730.

If a user operates a power button and sets from a 'power off' state to a 'power on' state, the power supply circuit 12700 supplies power to all the parts of the mobile phone 12500 from a battery pack, thereby setting the mobile phone 12500 to an operation mode.

The central controller 12710 includes a CPU, a read-only memory (ROM), and a random access memory (RAM).

While the mobile phone 12500 transmits communication data to the outside, a digital signal is generated by the mobile phone 12500 under control of the central controller 12710. For example, the sound processor 12650 may generate a digital sound signal, the image encoder 12720 may generate a digital image signal, and text data of a message may be generated via the operation panel 12540 and the operation input controller 12640. When a digital signal is transmitted to the modulation/demodulation unit 12660 by control of the central controller 12710, the modulation/demodulation unit 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is converted to a digital sound signal by the sound processor 12650 by the control of the central controller 12710. The generated digital sound signal may be converted to a transmission signal through the modulation/demodulation unit 12660 and the communication circuit 12610, and may be transmitted via the antenna 12510.

When a text message, e.g., email, is transmitted during a data communication mode, text data of the text message is input via the operation panel 12540 and is transmitted to the central controller 12610 via the operation input controller 12640. By the control of the central controller 12610, the text data is transformed into a transmission signal via the modulation/demodulation unit 12660 and the communication circuit 12610 and is transmitted to the wireless base station 12000 via the antenna 12510.

In order to transmit image data during the data communication mode, image data captured by the camera 12530 is provided to the image encoder 12720 via the camera interface 12630. The captured image data may be directly displayed on the display screen 12520 via the camera interface 12630 and the LCD controller 12620.

A structure of the image encoder 12720 may correspond to that of the video encoding apparatus 100 according to an embodiment. The image encoder 12720 may transform the image data received from the camera 12530 into compressed and encoded image data according to the aforementioned video encoding method, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoder 12720, together with the sound data received from the sound processor 12650. A result of multiplexing the data may be transformed into a transmission signal via the modulation/demodulation unit 12660 and the communication circuit 12610, and may then be transmitted via the antenna 12510.

While the mobile phone 12500 receives communication data from the outside, frequency recovery and analog-to-digital conversion (ADC) are performed on a signal received via the antenna 12510 to transform the signal into a digital signal. The modulation/demodulation unit 12660 modulates a frequency band of the digital signal. The frequency-band modulated digital signal is transmitted to the video decoder 12690, the sound processor 12650, or the LCD controller 12620, according to the type of the digital signal.

During the conversation mode, the mobile phone 12500 amplifies a signal received via the antenna 12510, and obtains a digital sound signal by performing frequency conversion and ADC on the amplified signal. A received digital sound signal is transformed into an analog sound signal via the modulation/demodulation unit 12660 and the sound processor 12650, and the analog sound signal is output via the speaker 12580 by the control of the central controller 12710.

When during the data communication mode, data of a video file accessed at an Internet website is received, a signal received from the wireless base station 12000 via the antenna 12510 is output as multiplexed data via the modulation/demodulation unit 12660, and the multiplexed data is transmitted to the multiplexer/demultiplexer 12680.

In order to decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoder 12690 and the sound processor 12650, respectively.

A structure of the image decoder 12690 may correspond to that of the video decoding apparatus described above. The image decoder 12690 may decode the encoded video data to obtain reconstructed video data and provide the reconstructed video data to the display screen 12520 via the LCD controller 12620, by using the aforementioned video decoding method.

Thus, the data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both a video encoding apparatus and a video decoding apparatus according to an embodiment, may be a transmitting terminal including only the video encoding apparatus according to an embodiment, or may be a receiving terminal including only the video decoding apparatus according to an embodiment.

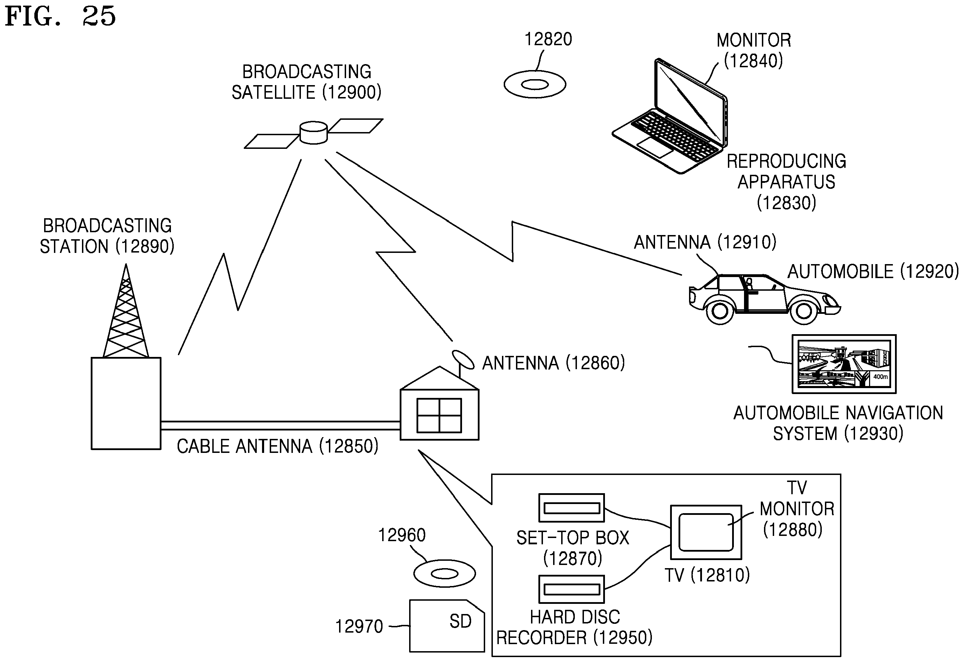

A communication system according to an embodiment is not limited to the communication system described above with reference to FIG. 24. For example, FIG. 25 illustrates a digital broadcasting system employing a communication system, according to various embodiments. The digital broadcasting system of FIG. 25 may receive a digital broadcast transmitted via a satellite or a terrestrial network by using the video encoding apparatus and the video decoding apparatus according to the embodiments.

In more detail, a broadcasting station 12890 transmits a video data stream to a communication satellite or a broadcasting satellite 12200 by using radio waves. The broadcasting satellite 12200 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When the video decoding apparatus according to an embodiment is implemented in a reproducing apparatus 12130, the reproducing apparatus 12130 may parse and decode an encoded video stream recorded on a storage medium 12120, such as a disc or a memory card to reconstruct digital signals. Thus, the reconstructed video signal may be reproduced, for example, on a monitor 12840.

In the set-top box 12870 connected to the antenna 12860 for a satellite/terrestrial broadcast or a cable antenna 12850 for receiving a cable television (TV) broadcast, the video decoding apparatus according to an embodiment may be installed. Data output from the set-top box 12870 may also be reproduced on a TV monitor 12880.

As another example, the video decoding apparatus according to an embodiment may be installed in the TV receiver 12810 instead of the set-top box 12870.

An automobile 12220 that has an appropriate antenna 12210 may receive a signal transmitted from the satellite 12200 or the wireless base station 11700. A decoded video may be reproduced on a display screen of an automobile navigation system 12230 installed in the automobile 12220.

A video signal may be encoded by the video encoding apparatus according to an embodiment and may then be recorded to and stored in a storage medium. In more detail, an image signal may be stored in a DVD disc 12960 by a DVD recorder or may be stored in a hard disc by a hard disc recorder 12950. As another example, the video signal may be stored in an SD card 12970. If the hard disc recorder 12950 includes the video decoding apparatus according to an embodiment, a video signal recorded on the DVD disc 12960, the SD card 12970, or another storage medium may be reproduced on the TV monitor 12880.

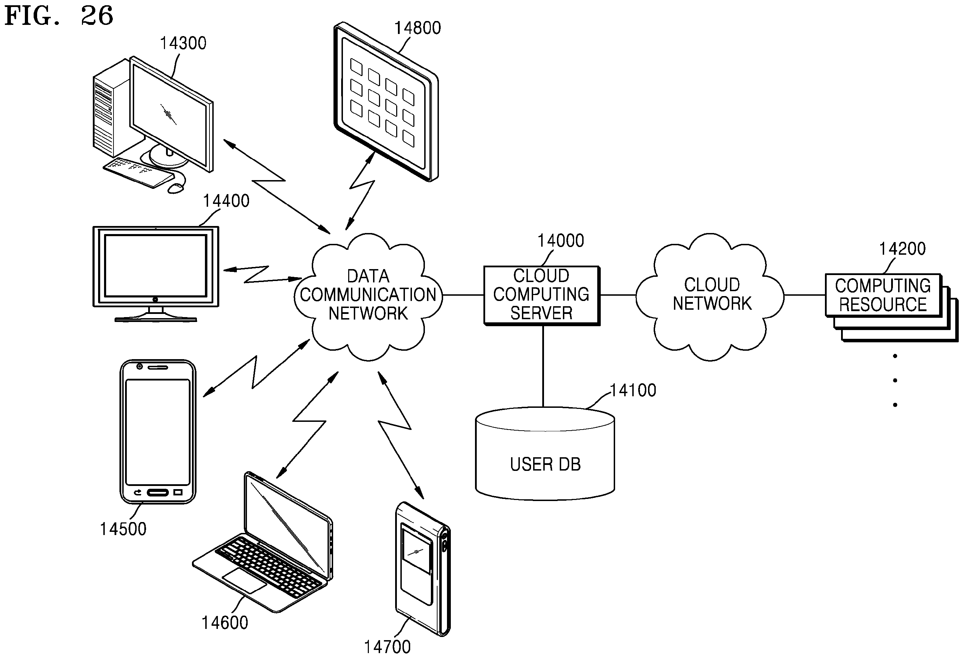

The automobile navigation system 12930 may not include the camera 12530, the camera interface 12630, and the image encoder 12720 of FIG. 26. For example, the computer 12100 and the TV receiver 12810 may not include the camera 12530, the camera interface 12630, and the image encoder 12720 of FIG. 26.

FIG. 26 illustrates a network structure of a cloud computing system using the video encoding apparatus and the video decoding apparatus, according to various embodiments.

The cloud computing system may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security software, into his/her own terminal in order to use them, but may select and use desired services from among services in a virtual space generated through the virtualization technology, at a desired point in time.

A user terminal of a specified service user is connected to the cloud computing server 14000 via a data communication network including the Internet and a mobile telecommunication network. User terminals may be provided cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14100, and the like.

The cloud computing server 14000 may combine the plurality of computing resources 14200 distributed in a cloud network and may provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information about users who have subscribed for a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request to reproduce the video service is received from the smart phone 14500, the cloud computing server 14000 searches for and reproduces the video service, based on the user DB 14100. When the smart phone 14500 receives a video data stream from the cloud computing server 14000, a process of reproducing video by decoding the video data stream is similar to an operation of the mobile phone 12500 described above with reference to FIG. 24.

The cloud computing server 14000 may refer to a reproduction history of a desired video service, stored in the user DB 14100. For example, the cloud computing server 14000 receives a request to reproduce a video stored in the user DB 14100, from a user terminal. If this video was being reproduced, then a method of streaming this video, performed by the cloud computing server 14000, may vary according to the request from the user terminal, i.e., according to whether the video will be reproduced, starting from a start thereof or a pausing point thereof. For example, if the user terminal requests to reproduce the video, starting from the start thereof, the cloud computing server 14000 transmits streaming data of the video starting from a first frame thereof to the user terminal. On the other hand, if the user terminal requests to reproduce the video, starting from the pausing point thereof, the cloud computing server 14000 transmits streaming data of the video starting from a frame corresponding to the pausing point, to the user terminal.

Here, the user terminal may include the video decoding apparatus according to an embodiment as described above with reference to FIGS. 1A through 19. As another example, the user terminal may include the video encoding apparatus according to an embodiment as described above with reference to FIGS. 1A through 20. Alternatively, the user terminal may include both the video encoding apparatus and the video decoding apparatus according to an embodiment as described above with reference to FIGS. 1A through 19.

Various applications of the image encoding method, the image decoding method, the image encoding apparatus, and the image decoding apparatus described above with reference to FIGS. 1A through 19 are described above with reference to FIGS. 20 through 26. However, various embodiments of methods of storing the video encoding method and the video decoding method in a storage medium or various embodiments of methods of implementing the video encoding apparatus and the video decoding apparatus in a device described above with reference to FIGS. 1A through 19 are not limited to the embodiments of FIGS. 20 through 26.

While the present disclosure has been particularly shown and described with reference to embodiments thereof, it will be understood by one of ordinary skill in the art that various changes in form and details may be made therein without departing from the spirit and scope of the following claims. Therefore, the scope of the present disclosure is defined not by the detailed description of the present disclosure but by the appended claims, and all differences within the scope will be construed as being included in the present disclosure.

**Claims**

**1.** A method of encoding an image, the method comprising:

determining at least one compression unit included in the image;
determining a scheme of changing a plurality of samples included in a current compression unit;
changing the plurality of samples of the current compression unit based on the determined at least one compression unit and the determined scheme;
splitting one of maximum coding units of the image comprising the changed plurality of samples into at least one coding unit;
performing prediction by using at least one prediction unit determined from the at least one coding unit; and
encoding the at least one coding unit by performing transformation by using at least one transformation unit determined from the at least one coding unit,

wherein the encoding comprises generating a bitstream comprising first information indicating the determined scheme.

2. The method of claim 1, wherein the changing of the plurality of samples comprises changing a plurality of samples of a neighboring compression unit adjacent to a boundary of the current compression unit by using a scheme corresponding to the determined scheme.

3. The method of claim 2, wherein the encoding comprises performing prediction on the plurality of samples of the current compression unit by using the changed plurality of samples of the neighboring compression unit.

4. The method of claim 2, wherein the determining of the scheme comprises determining the scheme of changing the plurality of samples of the current compression unit based on a scheme of changing the plurality of samples of the neighboring compression unit.

5. The method of claim 1, wherein the changing of the plurality of samples comprises, when inter prediction is performed in the at least one coding unit, changing a plurality of samples of a compression unit on at least one reference frame referred to by a current frame by using the scheme of changing the plurality of samples of the current compression unit.

6. The method of claim 1, wherein the generating of the bitstream comprising the first information comprises generating the bitstream comprising the first information corresponding to the determined scheme based on a lookup table comprising information about changeable schemes.

7. The method of claim 1, further comprising
generating the bitstream comprising second information indicating whether to change the plurality of samples,
wherein the determining of the scheme comprises determining the scheme of changing the plurality of samples when the second information indicates changing of the plurality of samples.

8. The method of claim 1, wherein the determining of the scheme comprises determining the scheme based on a rate distortion cost of the image.

9. The method of claim 1, wherein the scheme comprises at least one of sampling, flipping, filtering, transformation, rotation, and deformation of the plurality of samples of the current compression unit.

10. A method of decoding an image, the method comprising:

splitting one of maximum coding units of the image into at least one coding unit;
performing prediction based on at least one prediction unit determined from the at least one coding unit;
performing inverse transformation on the image based on at least one transformation unit determined from the coding unit;
determining at least one compression unit included in the image reconstructed based on the prediction and the inverse transformation;
obtaining first information indicating a scheme of changing a plurality of samples included in a current compression unit, from a bitstream;
determining the scheme of changing the plurality of samples based on the obtained first information; and
changing the plurality of samples of the current compression unit based on the determined at least one compression unit and the determined scheme.

11. The method of claim 10, wherein the changing of the plurality of samples further comprises changing a plurality of samples of a neighboring compression unit adjacent to a boundary of the current compression unit by using a scheme corresponding to the determined scheme.

12. The method of claim 11, wherein the performing of the prediction comprises performing prediction on the plurality of samples of the current compression unit by using the changed plurality of samples of the neighboring compression unit.

13. The method of claim 10, wherein the determining of the scheme comprises determining the scheme of changing the plurality of samples of the current compression unit based on a scheme of changing the plurality of samples of the neighboring compression unit.

**14.** The method of claim 10, wherein the changing of the plurality of samples comprises, when inter prediction is performed in the at least one coding unit, changing a plurality of samples of a compression unit on at least one reference frame referred to by a current frame by using the scheme of changing the plurality of samples of the current compression unit.

**15.** The method of claim 10, wherein the determining of the scheme comprises determining the scheme of changing the plurality of samples based on a lookup table comprising the first information and information about changeable schemes.

**16.** The method of claim 10, further comprising obtaining second information indicating whether to change the plurality of samples from the bitstream,
wherein the determining of the scheme comprises determining the scheme of changing the plurality of samples when the second information indicates changing of the plurality of samples.

**17.** The method of claim 9, wherein the scheme comprises at least one of sampling, flipping, filtering, transformation, rotation, and deformation of the plurality of samples of the current compression unit.

**18.** An apparatus for encoding an image, the apparatus comprising:

an encoder configured to determine at least one compression unit included in the image, determine a scheme of changing a plurality of samples included in a current compression unit, change the plurality of samples of the current compression unit based on the determined at least one compression unit and the determined scheme, split one of maximum coding units of the image comprising the changed plurality of samples into at least one coding unit, perform prediction by using at least one prediction unit determined from the at least one coding unit, and encode the at least one coding unit by performing transformation by using at least one transformation unit determined from the at least one coding unit; and
a bitstream generator configured to generate a bitstream comprising first information indicating the determined scheme.

**19.** An apparatus for decoding an image, the apparatus comprising:

an information obtainer configured to obtain, from a bitstream, first information indicating a scheme of changing a plurality of samples included in a current compression unit; and
a decoder configured to split one of maximum coding units of the image into at least one coding unit based on information about a largest size of a coding unit of the image, perform prediction based on at least one prediction unit determined from the at least one coding unit, performing inverse transformation on the image based on at least one transformation unit determined from the coding unit, determine at least one compression unit included in the image reconstructed based on the prediction and the inverse transformation, determine the scheme of changing the plurality of samples based on the obtained first information, change the plurality of samples of the current compression unit based on the determined at least one compression unit and the determined scheme, and perform prediction based on result of the changing and the at least one prediction unit.

**20.** A non-transitory computer-readable recording medium having recorded thereon a program which, when executed by a computer, performs the method of claim 1.

**21.** A non-transitory computer-readable recording medium having recorded thereon a program which, when executed by a computer, performs the method of claim 9.

# FIG. 1A

BITSTREAM
GENERATOR

ENCODER

# FIG. 1B

INFORMATION
OBTAINER

DECODER

# FIG. 2A

START

DETERMINE AT LEAST ONE
COMPRESSION UNIT INCLUDED IN IMAGE — S210

DETERMINE SCHEME OF CHANGING
PLURALITY OF SAMPLES CORRESPONDING
TO CURRENT COMPRESSION UNIT — S211

CHANGE PLURALITY OF SAMPLES OF CURRENT
COMPRESSION UNIT BASED ON DETERMINED
COMPRESSION UNIT AND DETERMINED SCHEME — S212

SPLIT ONE OF MAXIMUM CODING UNIT OF
IMAGE INCLUDING CHANGED PLURALITY OF
SAMPLES INTO AT LEAST ONE CODING UNIT — S213

PERFORM PREDICTION BY USING AT LEAST ONE
PREDICTION UNIT DETERMINED FROM CODING UNIT — S214

ENCODE CODING UNIT BY PERFORMING TRANSFORMATION
BY USING AT LEAST ONE TRANSFORMATION
UNIT DETERMINED FROM CODING UNIT — S215

END

# FIG. 2B

START

SPLIT ONE OF MAXIMUM CODING UNIT OF IMAGE INTO AT LEAST ONE CODING UNIT — S220

PERFORM PREDICTION BASED ON AT LEAST ONE PREDICTION UNIT DETERMINED FROM CODING UNIT — S221

PERFORM INVERSE TRANSFORMATION ON IMAGE BASED ON AT LEAST ONE TRANSFORMATION UNIT DETERMINED FROM CODING UNIT — S222

DETERMINING AT LEAST ONE COMPRESSION UNIT INCLUDED IN IMAGE RECONSTRUCTED BASED ON PREDICTION AND INVERSE TRANSFORMATION — S223

OBTAIN, FROM BITSTREAM, FIRST INFORMATION INDICATING SCHEME OF CHANGING PLURALITY OF SAMPLES INCLUDED IN CURRENT COMPRESSION UNIT — S224

DETERMINE SCHEME OF CHANGING PLURALITY OF SAMPLES BASED ON OBTAINED FIRST INFORMATION — S225

CHANGE PLURALITY OF SAMPLES OF CURRENT COMPRESSION UNIT BASED ON DETERMINED COMPRESSION UNIT AND SCHEME — S226

END

# FIG. 3A

EP 3 203 744 A1

EP 3 203 744 A1

FIG. 3B

FIG. 3C

# FIG. 3D

EP 3 203 744 A1

# FIG. 4A

# FIG. 4B

EP 3 203 744 A1

FIG. 4C

# FIG. 5A

FIG. 5B

EP 3 203 744 A1

**FIG. 6A**

FIG. 6B

EP 3 203 744 A1

# FIG. 7

100

| 110 | 120 | 130 |
|---|---|---|
| LCU SPLITTER | CODING UNIT DETERMINER | OUTPUTTER |

# FIG. 8

200

| 210 | 220 | 230 |
|---|---|---|
| RECEIVER | IMAGE DATA AND ENCODING INFORMATION EXTRACTOR | IMAGE DATA DECODER |

# FIG. 9

| | | | |
|---|---|---|---|
| 64×64 | 64×32 | 32×64 | 32×32 |
| 32×32 | 32×16 | 16×32 | 16×16 |
| 16×16 | 16×8 | 8×16 | 8×8 |
| 8×8 | 8×4 | 4×8 | 4×4 |

RESOLUTION:1920×1080
MAXIMUM SIZE OF
CODING UNIT:64
MAXIMUM DEPTH=2

315

— 310

RESOLUTION:1920×1080
MAXIMUM SIZE OF
CODING UNIT:64
MAXIMUM DEPTH=3

— 320

RESOLUTION:352×288
MAXIMUM SIZE OF
CODING UNIT:16
MAXIMUM DEPTH=1

— 330

335  325

# FIG. 10

EP 3 203 744 A1

# FIG. 11

EP 3 203 744 A1

# FIG. 12

600

MAXIMUM HEIGHT AND
MAXIMUM WIDTH OF
CODING UNIT=64          MAXIMUM DEPTH=3

LCU

| 64 ⟋610 | 64 ⟋612 | 32 ⟋614 | 32 ⟋616 |
|---|---|---|---|
| 64  64×64 | 32  64×32 | 64  32×64 | 32  32×32 |

| 32 ⟋620 | 32 ⟋622 | 16 ⟋624 | 16 ⟋626 |
|---|---|---|---|
| 32  32×32 | 16  32×16 | 32  16×32 | 16  16×16 |

| 16 ⟋630 | 16 ⟋632 | 8 ⟋634 | 8 ⟋636 |
|---|---|---|---|
| 16  16×16 | 8  16×8 | 16  8×16 | 8  8×8 |

| 8 ⟋640 | 8 ⟋642 | 4 ⟋644 | 4 ⟋646 |
|---|---|---|---|
| 8  8×8 | 4  8×4 | 8  4×8 | 4  4×4 |

PREDICTION
UNIT/
PARTITION

SCU

DEEPER CODING UNIT

# FIG. 13

CODING UNIT (710)

TRANSFORMATION UNIT (720)

64

32

| | |
|---|---|
| | |

64×64

32×32

# FIG. 14

PARTITION TYPE (800)

PREDICTION MODE (810)

SIZE OF TRANSFORMATION UNIT (820)

FIG. 15

# FIG. 16

CODING UNIT (1010)

# FIG. 17

PREDICTION UNIT (1060)

FIG. 18

1014

1016

1022

1032

1048

1054

TRANSFORMATION UNIT (1070)

1050

1052

# FIG. 19

EP 3 203 744 A1

# FIG. 20

Se

Tr

DISC (26000)

# FIG. 21

26700

26800

26000

**FIG. 22**

STREAMING SERVER (11300)

CAMERA (12600)

COMPUTER (12100)

(11700)

COMMUNICATION NETWORK (11400)

(11800)

PDA (12200)

(11900)

VIDEO CAMERA (12300)

INTERNET (11100)

(12000)

SERVICE PROVIDER (11200)

11000

MOBILE PHONE (12500)

EP 3 203 744 A1

# FIG. 23

# FIG. 24

SYNCHRONIZATION BUS (12730)

DISPLAY SCREEN — 12520

LCD CONTROLLER — 12620

POWER SUPPLY CIRCUIT — 12700

IMAGE DECODER — 12690

CENTRAL CONTROLLER — 12710

MULTIPLEXER/ DEMULTIPLEXER — 12680

OPERATION INPUT CONTROLLER — 12640

OPERATION PANEL — 12540

12510

STORAGE MEDIUM — 12570

RECORDER/READER — 12670

IMAGE ENCODER — 12720

COMMUNICATION CIRCUIT — 12610

MODULATOR/ DEMODULATOR — 12660

CAMERA INTERFACE — 12630

CAMERA — 12530

MICROPHONE — 12550

SOUND PROCESSOR — 12650

SPEAKER — 12580

12500

EP 3 203 744 A1

FIG. 25

**FIG. 26**

## INTERNATIONAL SEARCH REPORT

| | International application No. |
|---|---|
| | **PCT/KR2015/008814** |

**A. CLASSIFICATION OF SUBJECT MATTER**

*H04N 19/503(2014.01)i, H04N 19/50(2014.01)i, H04N 19/176(2014.01)i*

According to International Patent Classification (IPC) or to both national classification and IPC

**B. FIELDS SEARCHED**

Minimum documentation searched (classification system followed by classification symbols)
H04N 19/503; H04N 19/593; H04N 19/625; H04N 19/17; H04N 19/20; H04N 19/119; H04N 19/103; H04N 19/176

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: encoding, unit, sample, change

**C. DOCUMENTS CONSIDERED TO BE RELEVANT**

| Category* | Citation of document, with indication, where appropriate, of the relevant passages | Relevant to claim No. |
|---|---|---|
| Y | KR 10-2014-0007074 A (MITSUBISHI ELECTRIC CORPORATION) 16 January 2014<br>See paragraphs [0025]-[0096], [0179] and figures 1-4. | 1-21 |
| Y | KR 10-0535631 B1 (PANTECH&CURITEL COMMUNICATIONS, INC.) 10 July 2006<br>See claims 4-8, 20 and figures 5-8. | 1-21 |
| A | KR 10-1380580 B1 (THOMSON LICENSING) 02 April 2014<br>See paragraphs [0168]-[0223], claims 1-27 and figures 17-27. | 1-21 |
| A | LIQUAN SHEN et al. "An effective CU size decision method for HEVC encoders."<br>IEEE Transactions on Multimedia, vol. 15, No. 2, 28 February 2013, pages 465-470,<br>ISSN 1520-9210.<br>See pages 465-470. | 1-21 |
| A | KR 10-2010-0017453 A (LG ELECTRONICS INC. et al.) 16 February 2010<br>See abstract, claims 1-13 and figures 8-9c. | 1-21 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 NOVEMBER 2015 (21.11.2015) | **18 FEBRUARY 2016 (18.02.2016)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (January 2015)

INTERNATIONAL SEARCH REPORT
Information on patent family members

International application No.

PCT/KR2015/008814

| Patent document cited in search report | Publication date | Patent family member | Publication date |
|---|---|---|---|
| KR 10-2014-0007074 A | 16/01/2014 | CA 2833902 A1 | 27/12/2012 |
| | | CN 103503457 A | 08/01/2014 |
| | | EP 2725795 A1 | 30/04/2014 |
| | | EP 2824926 A1 | 14/01/2015 |
| | | JP 2014-003721 A | 09/01/2014 |
| | | JP 2014-103678 A | 05/06/2014 |
| | | JP 2014-147122 A | 14/08/2014 |
| | | JP 5389297 B2 | 15/01/2014 |
| | | JP 5744168 B2 | 01/07/2015 |
| | | JP 5752204 B2 | 22/07/2015 |
| | | JP 5762596 B2 | 12/08/2015 |
| | | KR 10-2014-0096394 A | 05/08/2014 |
| | | KR 10-2015-0061015 A | 03/06/2015 |
| | | TW 201313032 A | 16/03/2013 |
| | | US 2014-0064368 A1 | 06/03/2014 |
| | | WO 2012-176381 A1 | 27/12/2012 |
| KR 10-0535631 B1 | 10/07/2006 | EP 0924932 A2 | 23/06/1999 |
| | | EP 0924932 A3 | 01/12/1999 |
| | | JP 11-177980 A | 02/07/1999 |
| | | KR 10-1999-0027349 A | 15/04/1999 |
| | | KR 10-1999-0065274 A | 05/08/1999 |
| | | US 6307976 B1 | 23/10/2001 |
| KR 10-1380580 B1 | 02/04/2014 | CN 101502119 A | 05/08/2009 |
| | | CN 101502119 B | 23/05/2012 |
| | | CN 101502120 A | 05/08/2009 |
| | | CN 101502120 B | 29/08/2012 |
| | | EP 2047687 A2 | 15/04/2009 |
| | | EP 2050279 A2 | 22/04/2009 |
| | | JP 2009-545919 A | 24/12/2009 |
| | | JP 2009-545920 A | 24/12/2009 |
| | | JP 2014-060763 A | 03/04/2014 |
| | | JP 2014-060764 A | 03/04/2014 |
| | | JP 2015-144487 A | 06/08/2015 |
| | | KR 10-1526914 B1 | 08/06/2015 |
| | | US 2009-0196342 A1 | 06/08/2009 |
| | | US 2012-0177106 A1 | 12/07/2012 |
| | | WO 2008-016605 A2 | 07/02/2008 |
| | | WO 2008-016605 A3 | 23/10/2008 |
| | | WO 2008-016609 A2 | 07/02/2008 |
| | | WO 2008-016609 A3 | 09/10/2008 |
| KR 10-2010-0017453 A | 16/02/2010 | EP 2156670 A1 | 24/02/2010 |
| | | JP 2010-528555 A | 19/08/2010 |
| | | US 2010-0177819 A1 | 15/07/2010 |
| | | WO 2008-147125 A1 | 04/12/2008 |

Form PCT/ISA/210 (patent family annex) (January 2015)